(19) Europäisches Patentamt / European Patent Office / Office européen des brevets

(11) **EP 2 336 097 B1**

(12) **EUROPEAN PATENT SPECIFICATION**

(45) Date of publication and mention
of the grant of the patent:
**29.07.2015 Bulletin 2015/31**

(21) Application number: **09809926.0**

(22) Date of filing: **26.08.2009**

(51) Int Cl.:
***C04B 35/48*** *(2006.01)*   ***A01K 87/04*** *(2006.01)*
***A44C 17/00*** *(2006.01)*

(86) International application number:
**PCT/JP2009/064835**

(87) International publication number:
**WO 2010/024275 (04.03.2010 Gazette 2010/09)**

(54) **DARK-BLUE CERAMIC AND DECORATIVE COMPONENT**

DUNKELBLAUES KERAMISCHES MATERIAL UND ZIERELEMENT

COMPOSANT DÉCORATIF EN CÉRAMIQUE BLEU FONCÉ

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **28.08.2008 JP 2008219255**

(43) Date of publication of application:
**22.06.2011 Bulletin 2011/25**

(73) Proprietor: **Kyocera Corporation
Kyoto-shi
Kyoto 612-8501 (JP)**

(72) Inventor: **MIKAKI,Shunji
Satsumasendai-shi
Kagoshima 895-0292 (JP)**

(74) Representative: **Hoffmann Eitle
Patent- und Rechtsanwälte PartmbB
Arabellastraße 30
81925 München (DE)**

(56) References cited:
**JP-A- 2 038 363     JP-A- 2 145 475
JP-A- 4 059 622     JP-A- 61 191 520
JP-A- 62 297 261**

**Description**

Technical Field

The present invention relates to dark bluish ceramics that is preferably used as a decorative component, and particularly to a decorative component for watch, such as wristwatch case or band links; a decorative component for mobile terminals, such as various keys that are operated by pushing, and case; a decorative component for fishing line guides, such as a fishing line guide ring; a decorative component for daily life articles, such as a soap case or scissors; a decorative component for vehicle supplies, such as an emblem of a manufacturer or a model name, or a corner pole; a decorative component for sports goods, such as an accessory of a golf club, or studs of spiked shoes; a decorative component for musical instruments, such as a base plate of a guitar; and a decorative component for accessories, such as a case of an earphone unit, or a bridge of eyeglasses; and a decorative component for architectural materials, such as a door handle.

Background art

Zirconia ceramics is used for decorative components, since it is excellent in mechanical properties and workability of the surface thereof. Thus there have been demands for zirconia ceramics that develops various color tones depending on user's diversified preferences.

In order to respond to such demands, for example, Patent Document 1 proposes colored zirconia ceramics, which contains 0.1 to 5% by weight of $CoO$ and 0.1 to 20% by weight of $Al_2O_3$ based on 100% by weight of mixture of zirconia and a stabilizing agent as the main component, as zirconia ceramics which develops bluish color tone. This publication describes the matters that $Al_2O_3$ functions to dilute the color developed by $CoO$ and that a delicate control of the color tone can be easily performed by varying the content of $CoO$ and $Al_2O_3$ within the above range, thereby there is obtained colored zirconia ceramics which has both high bending fracture strength and fracture toughness.

Prior Art Documents

Patent Documents

Patent Document 1: JP-A-2-38363

Disclosure of the Invention

Problems to be Solved by the Invention

The colored zirconia ceramics disclosed in Patent Document 1 has both high bending fracture strength and fracture toughness, and the bluish color tone can be controlled by varying a content of $CoO$ and $Al_2O_3$. However, the color tone of the ceramics can only be controlled within a range from a blue color to a light blue color. Thus, such ceramics could not develop a dark blue color tone, which attracts lots of attention especially in Europe. Since decorative components having a dark color tone can make users to feel a sense of stateliness (or a sense of massiveness), a high-grade impression and an aesthetic satisfaction by comfortable and austerely elegant color tone, zirconia ceramics that develops a dark blue color tone is eagerly anticipated.

The present invention has been worked out so as to solve the above problems and has objects to provide ceramics having dark bluish color tone that make users to feel the sense of stateliness, the high-grade impression and the aesthetic satisfaction through a visual sense, as well as decorative components that are made of such ceramics.

Means for Solving the Problems

The dark bluish ceramics of the present invention comprises the composition according to present claim 1.

EFFECT OF THE INVENTION

According to the bluish ceramics of the present invention, since it comprises zirconia containing stabilizing agent as a main component and aluminum oxide with a content not less than 1% by mass nor more than 30% by mass, cobalt oxide with a content not less than 0.5% by mass nor more than 5% by mass and any one selected from a group consisting of chromium oxide, nickel oxide and iron oxide with a content no more than 1% by mass (except for 0% by mass), aluminum oxide suppresses a grain growth of the zirconia crystal grains thereby avoiding abnormal grain growth.

Therefore, the ceramics having high mechanical properties such as strength or fracture toughness can be obtained. The present ceramics develops a dark bluish color tone full of the sense of stateliness, and makes users to feel the high-grade impression and the aesthetic satisfaction, since any one of chromium oxide, nickel oxide or iron oxide in an amount of not more than 1% by mass (except for 0% by mass) is added to the bluish color tone that is developed by combining the zirconia containing stabilizing agent, not less than 1% by mass nor more than 30% by mass of aluminum oxide and not less than 0.5% by mass nor more than 5% by mass of cobalt oxide.

Brief Description of the Drawings

Fig. 1 shows an example of a watch case that is a decorative component for watch of the present invention, wherein Fig. 1(a) is a perspective view of the watch case as seen from the front side and Fig. 1(b) is a perspective view of the watch case of Fig. 1(a) as seen from the back side.
Fig. 2 is a perspective view showing another example of the watch case that is the decorative component for watch of the present invention.
Fig. 3 is a schematic view showing an example of the constitution of a watch band that is a decorative component for watch of the present invention.
Fig. 4 is a perspective view showing an example of a mobile phone that uses a decorative component for mobile terminal of the present invention.
Fig. 5 is a perspective view showing the mobile phone of the example shown in Fig. 4 in a state of chassis opened.
Fig. 6 is a perspective view showing an example of a note-type personal computer that is a decorative component for mobile terminal of the present invention.
Fig. 7 shows a fish line guide ring that is a decorative component for fish line guide of the present invention and an example of a fish line guide provided with the fish line guide ring, wherein Fig. 7(a) is a plan view of the fish line guide ring and Fig. 7(b) is a perspective view of the fish line guide provided with the fish line guide ring shown in Fig. 7(a).
Fig. 8 is a schematic view showing an example of the constitution of a soap case that is a decorative component for daily life articles of the present invention.
Fig. 9 is a perspective view showing an example of a coffee cup set that is a decorative component for daily life articles of the present invention.
Fig. 10 is a perspective view showing an example of a vehicle body having a decorative component for vehicle parts of the present invention mounted thereon.
Fig. 11 is a front view showing an example of a corner pole that uses a decorative component for vehicle parts of the present invention.
Fig. 12 is a front view showing an example of a golf club that uses a decorative component for sports goods of the present invention.
Fig. 13 is a bottom view showing an example of spiked shoes that uses a decorative component for sports goods of the present invention.
Fig. 14 is a perspective view showing an example of a guitar that uses a decorative component for musical instrument of the present invention.
Fig. 15 is a front view showing an example of an earphone unit that uses a decorative component for accessory of the present invention.
Fig. 16 is a perspective view showing an example of eyeglasses that uses a decorative component for accessory of the present invention.
Fig. 17 is a perspective view showing an example of a door handle that uses a decorative component for architectural materials of the present invention.

Mode for Carrying Out the Invention

Examples of embodiments of the dark bluish ceramics of the present invention will be described below.
It is important that the dark bluish ceramics of the present invention comprises zirconia containing stabilizing agent as a main component, and aluminum oxide with a content of not less than 1% by mass nor more than 30% by mass, cobalt oxide with a content of not less than 0.5% by mass nor more than 5% by mass, and any one of chromium oxide, nickel oxide or iron oxide with a content of no more than 1% by mass (except for 0% by mass). As the stabilizing agent, for example, at least one kind selected from yttrium oxide ($Y_2O_3$), cerium oxide ($CeO_2$), dysprosium oxide ($Dy_2O_3$), magnesium oxide (MgO), neodymium oxide ($Nd_2O_3$) and calcium oxide (CaO) may be used. Since the dark bluish ceramics of the present invention comprises zirconia containing stabilizing agent as the main component thereof, it has a feature that mechanical properties such as strength and fracture toughness are high.

In addition, the dark bluish ceramics of the present invention develops a dark bluish color tone full of the sense of stateliness by adding no more than 1% by mass (except for 0% by mass) of any one of chromium oxide, nickel oxide or iron oxide to the bluish color tone that is developed by combining the zirconia containing stabilizing agent, not less than 1% by mass nor more than 30% by mass of aluminum oxide, and not less than 0.5% by mass nor more than 5% by mass of cobalt oxide, thus making it possible to make users to feel the high-grade impression and the aesthetic satisfaction by using the dark bluish ceramics of the present invention as the decorative component.

In the dark bluish ceramics of the present invention, since the content of the aluminum oxide is not less than 1% by mass nor more than 30% by mass, the grain growth of the zirconia crystal grains is suppressed and abnormal grain growth can be avoided by the aluminum oxide, thereby the strength of the ceramics is maintained and an appropriate brightness can be added to the dark bluish ceramics.

The color tone of the ceramics can be adjusted to present a blue color which is necessary to develop the dark bluish color tone while avoiding excess lightening of the color, since the content of aluminum oxide is within the above range and the content of cobalt oxide is in an amount of not less than 0.5% by mass nor more than 5% by mass.

Further, since the contents of aluminum oxide and cobalt oxide are within the above ranges and the content of any one of chromium oxide, nickel oxide or iron oxide is no more than 1% by mass (except for 0% by mass), the ceramics of the present invention can develop the dark bluish color tone full of the sense of stateliness. When the ceramics is used for decorative components, it can make users to feel the high-grade impression and the aesthetic satisfaction.

When the content of any one of chromium oxide, nickel oxide or iron oxide is more than 1% by mass, each of the original color of chromium oxide, nickel oxide or iron oxide or any reaction thereof with the other ingredients can make the developed color to be too darken, thereby the developed color becomes to be short in bluish tone and the ceramics becomes impossible to develop the dark bluish color tone. When the ceramics contains any one of chromium oxide, nickel oxide or iron oxide in trace amount, the color of the ceramics becomes darkened. But in order to develop a dark bluish color tone full of the sense of stateliness and to make users to feel the high-grade impression and the aesthetic satisfaction, the content thereof is at least 0.1% by mass.

In the dark bluish ceramics of the present invention, the cobalt oxide consists of $CoO$ and $Co_3O_4$. When the cobalt oxide contained in the dark bluish ceramics consists of $CoO$ that presents blue color tone and $Co_3O_4$ that presents black color tone, the sense of stateliness increases due to further darkening of the color tone, thereby the high-grade impression of the ceramics is improved. Thus, the users can feel an improved aesthetic satisfaction. The chemical configuration of cobalt oxide, which is contained in the dark bluish ceramics, can be confirmed by performing X-ray diffraction measurement of the dark bluish ceramics using an X-ray diffraction apparatus and identifying the crystal peaks of $CoO$ and $Co_3O_4$ from thus obtained X-ray diffraction charts.

The dark bluish ceramics of the present invention preferably contains hafnium oxide. When the dark bluish ceramics of the present invention contains hafnium oxide, the color tone of the ceramics becomes further dark, thus the sense of stateliness is improved. Therefore, it is made possible to make users to highly feel the high-grade impression and the aesthetic satisfaction. Although the reason why the color tone of the ceramics becomes further dark due to containing hafnium oxide is not clear, it may be contemplated that hafnium oxide contained in the ceramics causes fine differences of the refractive index of the light striking on the surface of the dark bluish ceramics of the present invention or reduces a translucent feeling of the ceramics. It is suitable that the content of hafnium oxide in the dark bluish ceramics of the present invention is not less than 0.5% by mass nor more than 3% by mass based on 100% by mass of all components constituting the dark bluish ceramics. The hafnium oxide may be added when the raw materials are blended or may be already contained in the raw material of zirconium oxide.

In the dark bluish ceramics of the present invention, the mass ratio of cobalt oxide to any one of chromium oxide, nickel oxide or iron oxide (i.e. the ratio of the mass of cobalt oxide to the mass of any one of chromium oxide, nickel oxide or iron oxide) is preferably not less than 2 nor more than 20. When the mass ratio of cobalt oxide to any one of chromium oxide, nickel oxide or iron oxide is not less than 2 nor more than 20, a favorable balance of mass between cobalt oxide that influences a contrasting density of the blue color and any one of chromium oxide, nickel oxide or iron oxide that presents the dark color tone can be obtained. Therefore, the dark bluish ceramics of the present invention is full of the sense of stateliness, thus making the users to feel the high-grade impression and the aesthetic satisfaction.

The contents of zirconia, aluminum oxide, cobalt oxide, chromium oxide, nickel oxide, iron oxide and the respective oxides as the stabilizing agent can be obtained by determining the content of each element using X-ray fluorescence spectroscopy or inductively coupled plasma (ICP) emission spectrometry, and converting the content to that of oxide.

In the dark bluish ceramics of the present invention, it is preferable that the stabilizing agent is a compound containing yttrium or a compound containing cerium and dysprosium. When the compound containing yttrium is used, the ceramics has improved mechanical properties such as a three-point bending strength or fracture toughness rather than the compounds containing the other stabilizing agents. When the compound containing cerium and dysprosium is used, it becomes possible to suppress phase transition of the zirconia crystal from a tetragonal crystal to a monoclinic crystal. For example, when exposed to a high temperature of 100°C or higher, it is possible to make it difficult to cause cracking or breakage on the surface due to expansion in volume associated with phase transition, and thus the heat resistance of the dark bluish ceramics can be improved.

In the dark bluish ceramics of the present invention, it is preferable that the content of the compound containing yttrium is not less than 2% by mol nor more than 4% by mol. Thus, the zirconia, which is the main component, can be sufficiently stabilized, and the ratio of the monoclinic crystal can be kept low level and the ratio of the tetragonal crystal and the cubical crystal, both of which are stable at the room temperature, can be kept high level within the crystals. Therefore, the dark bluish ceramics having improved mechanical properties such as three-point bending strength or fracture toughness can be obtained.

In the dark bluish ceramics of the present invention, it is preferable that a total content of the compound containing cerium and the compound containing dysprosium is not less than 4.5% by mol nor more than 11% by mol. Thus, the zirconia, which is the main component, can be sufficiently stabilized, and a phase transition of the zirconia crystal from the tetragonal crystal to the monoclinic crystal is suppressed and thereby the tendency to form cracking or breakage on the surface due to expansion in volume associated with phase transition can be suppressed. Therefore, the heat resistance of the present ceramics can be improved.

In addition, as to the ratios of the compound containing cerium and the compound containing dysprosium, it is preferable that a content of the compound containing cerium is preferably not less than 4% by mol nor more than 8% by mol and a content of the compound containing dysprosium is preferably not less than 0.5% by mol nor more than 3% by mol. Keeping each content within the above range makes it possible to make the ceramics of the present invention to possess both the suitable heat resistance and mechanical properties.

Examples of the compound containing yttrium include yttrium oxide ($Y_2O_3$), yttrium nitrate hexahydrate ($Y(NO_3)_3 \cdot 6H_2O$), yttrium chloride hexahydrate ($YCl_3 \cdot 6H_2O$) and yttrium acetate trihydrate ($Y(CH_3COO)_3 \cdot 3H_2O$) etc. It is also possible to use a compound of yttrium (Y) and aluminum (Al), such as $YAlO_3$ (YAP), $Y_3Al_5O_{12}$ (YAG) and $Y_4Al_5O_9$ (YAM).

It is also possible to use, as the compound containing cerium, cerium oxide ($CeO_2$), cerium acetate ($Ce(C_2H_3O_2)_3 \cdot nH_2O$), cerium hydroxide ($Ce(OH)_4 \cdot nH_2O$), cerium chloride ($CeCl_3 \cdot nH_2O$) and ceric sulfate ($Ce(SO_4)_2$) etc.

It is also possible to use, as the compound containing dysprosium, dysprosium oxide ($Dy_2O_3$), dysprosium carbonate ($Dy_2(CO_3)_3$), dysprosium chloride ($DyCl_3$), dysprosium fluoride ($DyF_3$), dysprosium nitrate ($Dy(NO_3)_3 \cdot 5H_2O$) and dysprosium sulfate ($Dy_2(SO_4)_3 \cdot 8H_2O$) etc.

It is preferable that the dark bluish ceramics of the present invention has a lightness index L* in a range of not less than 14 nor more than 25, and a chromaticness index a* in a range of not less than 0 nor more than 28 and a chromaticness index b* in a range of not less than -25 nor more than -53 in the L*a*b* color space of CIE1976 of the decorative surface. When the lightness index and chromaticness indices are in the above range, they exert an excellent synergistic effect, and thus the color tone becomes dark bluish color tone full of the sense of stateliness. Therefore, that makes it possible to make users to feel relaxed and aesthetic satisfaction.

The decorative surface in the dark bluish ceramics of the present invention refers only to a surface of a decorative component which is required to have decorative value, and does not mean the entire surface since it is unnecessary to include the surface to which decorative value is not required. For example, in case that the dark bluish ceramics of the present invention is used in a watch case, an outside surface of the watch case is subjected to aesthetic evaluation and is required to have decorative value, and is therefore referred to as the decorative surface, but an inner surface in which a drive mechanism of the watch is fitted is not usually required to have decorative value, and therefore it is not the decorative surface.

The lightness index L* indicates a degree of lightness or darkness of color tone, and a higher value of the lightness index L* means lighter color tone and a lower value of the lightness index L* means darker color tone. In the dark bluish ceramics of the present invention, when the value of lightness index L* is in a range of not less than 14 nor more than 25, it is possible to provide satisfactory brightness with the dark bluish color tone.

The chromaticness index a* indicates a proportion of red and green in the color tone. A larger positive value of chromaticness index a* means red color tone, and a smaller absolute value of chromaticness index a* means dull color tone with reduced vividness, while a lager negative value of chromaticness index a* means green color tone.

The chromaticness index b* indicates a proportion of yellow and blue in the color tone. A larger positive value of chromaticness index b* means yellow color tone and a smaller absolute value of chromaticness index b* means dull color tone with reduced vividness, while a larger negative value of chromaticness index b* means blue color tone. In the dark bluish ceramics of the present invention, when the chromaticness index a* is in a range of not less than 0 nor more than 28 and the chromaticness index b* is in a range of not less than -25 nor more than -53, it is possible to develop dull bluish color tone with reduced vividness.

The values of the lightness index L* and the chromaticness indices a* and b* in the L*a*b* color space of CIE1976 of the decorative surface of the dark bluish ceramics of the present invention can be obtained by measuring in accordance with a procedure specified in JIS Z 8722-2000. For example, the measurement can be conducted by using a colorimeter (CR-221 or a new model thereof, manufactured by the former Minolta Co., Ltd.) in combination with a CIE standard light source D65 as a light source in a light receiving method set under the conditions a ((45-n) [45-0]) with the measurement diameter being set to 3 mm. When it is impossible to ensure sufficient measurement diameter, the measurement may be conducted by setting to the same conditions as described above after polishing an arbitrary position.

It is preferable that the dark bluish ceramics of the present invention has an apparent density of not less than 5.9 g/cm$^3$ nor more than 6.1 g/cm$^3$. When a value of the apparent density increases, open voids of the decorative surface of the dark bluish ceramics decrease and crystal grains are suppressed from coming off from profiles of the open voids. In contrast, when the value of the apparent density decreases, mechanical properties tend to deteriorate. In order to suppress crystal grains from coming off without causing deterioration of mechanical properties, the apparent density is preferably not less than 5.9 g/cm$^3$ nor more than 6.1 g/cm$^3$. It is important to fire at a temperature in a range of 1,350°C to 1,550°C. This apparent density may be determined in accordance with JIS R 1634-1998.

It is preferable that a three-point bending strength determined in accordance with JIS R 1601-1995 is not less than 900 MPa in the dark bluish ceramics of the present invention. This value exceeds a bending strength 863 MPa of high-strength glass "Crysterna" whose application as a cover glass for watch is disclosed in Marubeni America Corporation Sunnyvale office homepage; [searched on February 20, 2008] internet <http://www.marubeni-sunnyvale.com/high-strengthened-glass.html>.

In the bluish ceramics of the present invention, the amount of open voids in the decorative surface exerts an influence on the degree of lightness or darkness of color tone, namely, the value of the lightness index L*. When the amount of open voids is large, the color tone of the surface becomes light as a result of the influence of variations in color due to profiles of open voids, so that the value of the lightness index L* tends to increase. Therefore, an occupied area ratio of open voids in the decorative surface is preferably not more than 0.2%. In order to adjust the value of the lightness index L* in a range of not less than 14 nor more than 25 which is a preferable range of the dark bluish ceramics of the present invention, the occupied area ratio of open voids is preferably not more than 0.1%.

The occupied area ratio of open voids in the decorative surface of the dark bluish ceramics of the present invention can be measured using a metallurgical microscope. Specifically, an image of the decorative surface of the dark bluish ceramics of the present invention taken by a CCD camera with a magnification of 200 times is captured. Using an image analysis equipment (LUZEX-FS or a new model thereof, manufactured by Nireco Corporation), the total area of open voids of 20 visual fields was calculated with the measurement area of one visual field in this image being set to 2.25 X 10$^{-2}$ mm2, with the measurement field number being set to 20, and then divided by an entire measurement area observed being set to 4.5 X 10$^{-1}$ mm$^2$, thus making it possible to determine the occupied area ratio of open voids.

In the decorative surface of the dark bluish ceramics of the present invention, the size of an aperture diameter of open voids exerts an influence on variations in color. Therefore, a maximum aperture diameter of open voids is preferably not more than 50 $\mu$m. Meanwhile, the maximum aperture diameter of open voids can be measured using a metallurgical microscope. Specifically, under a magnification of 100 times, 5 points (an area per one point was set to area measuring 1235 $\mu$m X 926 $\mu$m) are extracted from the decorative surface of the dark bluish ceramics, and the diameter of the largest open void is measured, thus making it possible to obtain the maximum aperture diameter.

The higher the luster of the dark bluish ceramics of the present invention, the higher the high-grade impression becomes. Therefore, the smaller the surface roughness, the better the ceramics becomes. It is preferably to set an arithmetic mean height Ra of the decorative surface to not more than 0.03 $\mu$m. This arithmetic mean height Ra may be measured in accordance with JIS B 0601-2001. For example, in the case of disk-shaped dark bluish ceramics having a diameter of 10 to 20 mm, the arithmetic mean height is measured by using a contact probe type surface roughness meter, with the measurement length and the cut-off point being set to 5 mm and 0.8 mm, respectively, and putting a stylus having a tip radius of 2 $\mu$m into contact with the decorative surface of the ceramics, and scanning at a speed of 0.5 mm/sec.

In the dark bluish ceramics of the present invention, Vickers hardness (Hv) of the decorative surface is one of factors that exert an influence on long-term reliability, and the Vickers hardness (Hv) is preferably not less than 8 GPa. When the Vickers hardness (Hv) is not less than 8 GPa, scratches are not easily formed on the decorative surface even when a surface of the dark bluish ceramics is contacted with substances having high hardness, such as dusts composed of glass or metal. The Vickers hardness (Hv) of the decorative surface can be measured in accordance with JIS R 1610-2003.

The dark bluish ceramics of the present invention may contain an oxide which has a tendency to cause whitening, such as silicon dioxide ($SiO_2$) and sodium oxide ($Na_2O$) as an indispensable impurity. It is preferable that each content of silicon dioxide and sodium oxide contained as the indispensable impurity is not more than 0.5% by mass and the total content thereof is not more than 0.5% by mass based on 100% by mass of the dark bluish ceramics. It is also preferable that the dark bluish ceramics of the present invention does not substantially contain manganese oxide ($MnO_2$), titanium

oxide (TiO$_2$), vanadium oxide (V$_2$O$_5$), tin oxide (SnO$_2$) and silver oxide (Ag$_2$O), each of which has a strong tendency to cause blackening, and each content is preferably not more than 0.1% by mass based on 100% by mass of the dark bluish ceramics, respectively. The contents of these oxides can be determined by conducting semi-quantitative analysis of elements by a FP method using an X-ray fluorescence analyzer, or converting the content of each element determined by an ICP atomic emission spectrometry to that of oxide.

The decorative component for watch of the present invention is characterized in that it is constituted from the dark bluish ceramics having the above constitution, and examples thereof include watch case, and links of watchband.

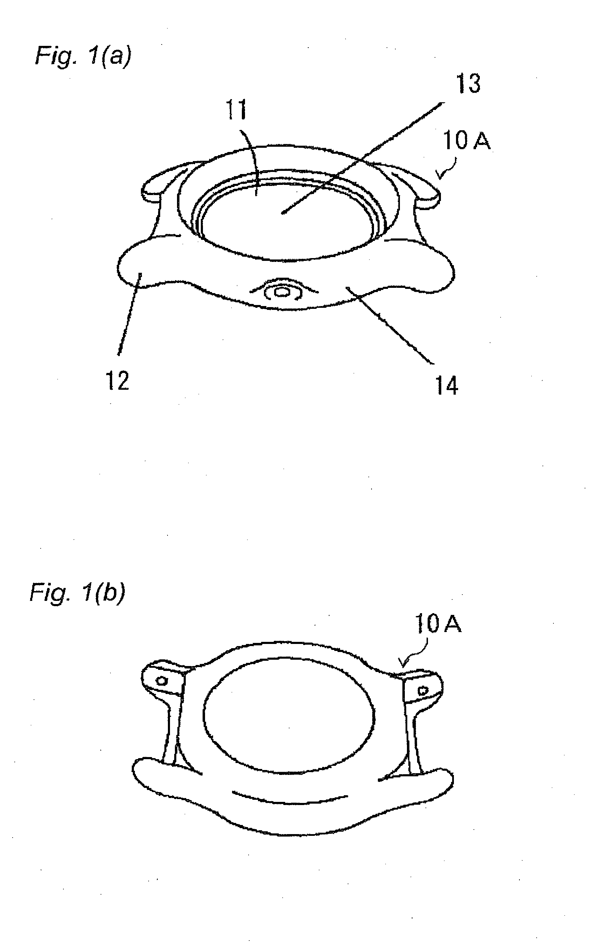

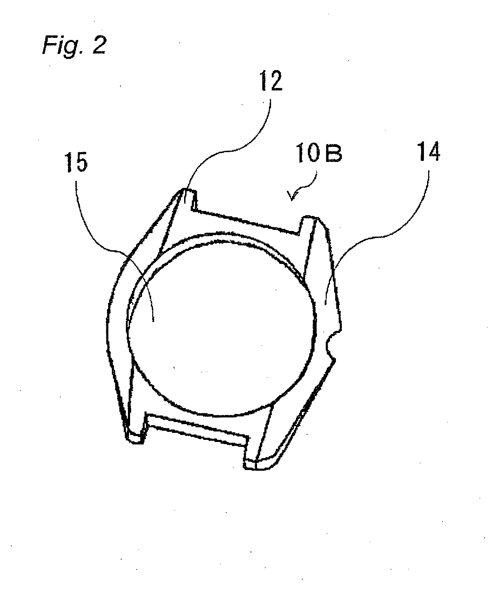

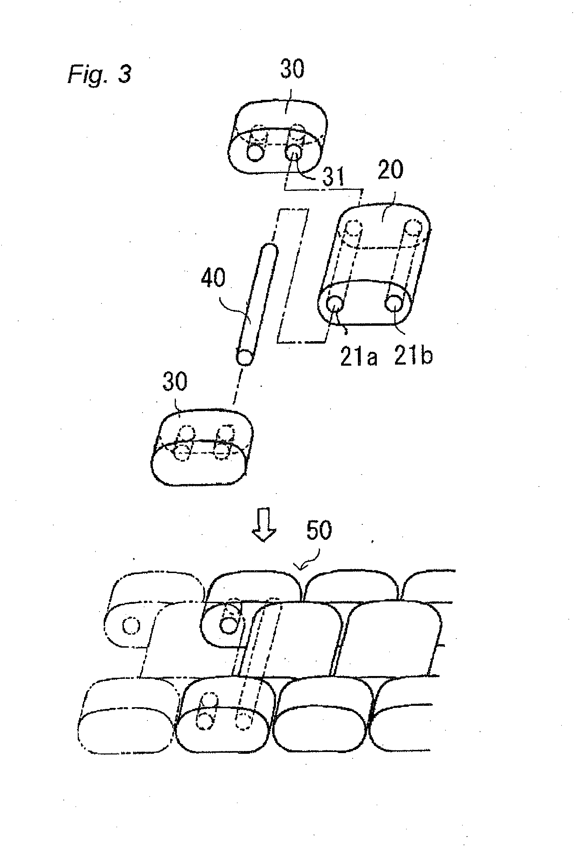

Fig. 1 shows an example of a watch case that is a decorative component for watch of the present invention, Fig. 1(a) is a perspective view of the watch case as seen from the front side, and Fig. 1(b) is a perspective view of the watch case of Fig. 1(a) as seen from the back side. Fig. 2 is a perspective view showing another example of the watch case that is the decorative component for watch of the present invention. Fig. 3 is a schematic diagram showing an example of constitution of the watchband that is the decorative component for watch of the present invention. Identical members are denoted with the same reference numeral in these drawings.

A watch case 10A shown in Fig. 1 has a recess 11 that houses a movement (drive mechanism) not shown, and legs 12 which engage a watchband (not shown) for wearing the watch on a wrist, and the recess 11 is constituted from a thin bottom 13 and a thick case body 14. The watch case 10B shown in Fig. 2 has a hole 15 that accommodates a movement (drive mechanism) not shown, and legs 12 formed on the case body 14 which engage a watchband (not shown) for wearing the watch on a wrist.

The band links that constitute the watchband 50 shown in Fig. 3 include: inner links 20 each having through hole 21 into which a pin 40 is inserted; and outer links 30 being disposed to sandwich the inner link 20 and each having pin holes 31 in which the ends of the pin 40 are inserted. The inner link 20 and the outer links 30 are sequentially linked with each other by inserting the pin 40 into the through hole 21 of the inner link 20, and engaging both ends of the inserted pin 40 in the pin holes 31 of the outer links 30, thereby to assemble the watchband 50.

Since a tensile load is frequently applied to inner links 20 as a portion of watch band links, not less than 196 N of the tensile strength should be required. In order to determine the tensile strength, after inserting a pin made of cemented carbide (not shown) that is longer than a length of through hole 21 into through holes 21a, 21b of inner links 20 and pulling them in a separation direction, the strength upon breakage of inner links 20 may be read by a load cell.

When the dark bluish ceramics of the present invention is used as these watch case 10A, 10B and watch band links constituting watch band 50, they have sufficient strength for withstanding a tensile loading frequently applied thereto, and make users to feel the sense of stateliness, high-grade impression having the elegance, and aesthetic satisfaction, thus resulting in the watch making it possible to make the users calm and composed by an atmospheric color tone, thus making it possible to makes users to feel relaxed and the aesthetic satisfaction.

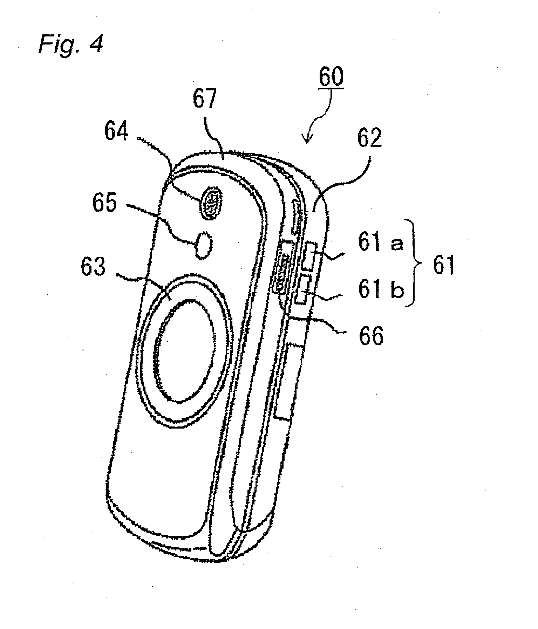

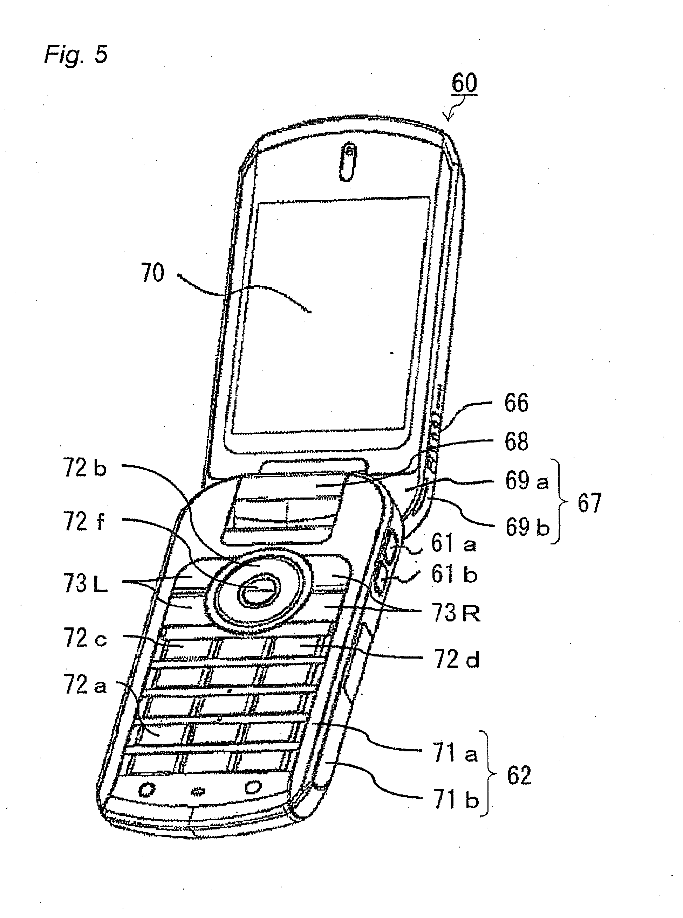

Fig. 4 is a perspective view showing an example of mobile phone that uses a decorative component for mobile terminal of the present invention. Fig. 5 is a perspective view showing the mobile phone shown in Fig. 4 in a state of chassis opened. The decorative component for mobile terminal of the present invention is formed from the dark bluish ceramics of the present invention, and specific examples thereof include various control keys and cases shown in Fig. 5.

The mobile phone 60 of the example shown in Fig. 4 includes: a mode key 61 consisting of change key 61a for changing the mode of the mobile phone 60 to a radio mode for listening to radio broadcast, a music mode for listening to music and the like, and a silencer key 61b for putting the mobile phone 60 into silent mode which are provided on a first chassis 62; a touch sensor 63 for entering commands by inspecting touch with a finger or the like thereon; a camera 64 for capturing an image; a light 65; and a slide switch 66 for setting enabling or disabling the entry through the touch sensor 63 and the like which are provided on a second chassis 67.

And an example of the mobile phone 60 as shown in Fig. 5 is in a state where the second chassis 67 remains opened. The first chassis 62 and the second chassis 67 are linked to each other via a hinge 68, so that the second chassis 67 can be freely opened. The second chassis 67 has a front case 69a and a rear case 69b, while a liquid crystal display 70 is provided on the front case 69a.

The first chassis 62 also includes a front case 71a and a rear case 71b, while various control keys are provided on the front case 71a. The control keys include numeric keys 72a for entering telephone numbers, cursor movement keys 72b for moving the cursor over various functions menu, a talk key 72c to be pressed to start talking when receiving a call, a power/hang up key 72d for turning the power on or off and hanging up the line to end talking, a center key 72f which is disposed at the center of the cursor movement key 72b, and function keys 73L, 73R disposed on the left and right sides of the cursor movement key 72b, etc.

When at least one kind of the front cases 69a and 71a and the rear cases 69b and 71b as the above cases, the numeral keys 72a as the control keys, the cursor movement keys 72b, the talk key 72c, the power/hang up key 72d, the center key 72f, the function keys 73L, 73R, etc. is formed from the dark bluish ceramics of the present invention, the obtained mobile phone makes users to feel the sense of stateliness, the high-grade impression and the aesthetic satisfaction, thus making it possible to make the users calm and composed by a dignified and atmospheric color tone. Also because the dark bluish ceramics of the present invention has favorable property for color coordination, it is capable of satisfying the diversity of user's preference by combining with members of various color tones.

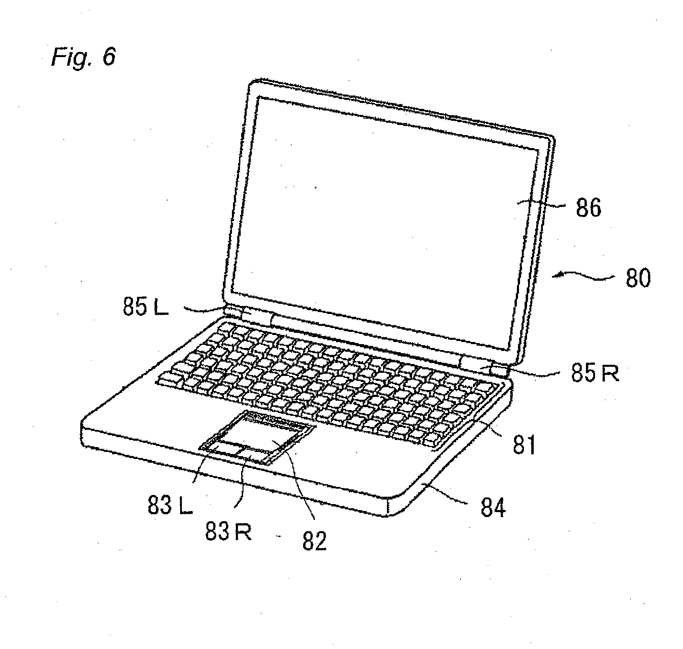

Next, Fig. 6 is a perspective view showing an example of a note-type personal computer that uses a decorative component for mobile terminal of the present invention.

The note-type personal computer 80 shown in Fig. 6 consists of: a body side casing 84 equipped with a keyboard 81, a track pad 82 and button switches 83L, 83R; and a display side casing 87 equipped with a display 86 fixed to the body side casing 84 through hinges 85L, 85R so as to be capable of freely opening and closing.

The keyboard 81 consists of a plurality of keys and enables input of characters and call up of functions by pushing keys. The track pad 82 consists of a pressure-sensitive or electrostatic pointing device and is used for move of a pointer and command input on a screen of the display 86. For example, it is used for specification of the file icon displayed on the display 86 and selection of application programs, and is also used for drag of the icon on the display 86 and plural selections of character string on a text file by a combination operation of button switches 83L, 83R.

The button switch 83L is used for command such as opening and closing of a file specified or selected by a pointing function of the track pad 82, or execution of processing, in addition to the above combination operation. The button switch 83R has a function to display a context menu on a screen of a display 86, and to display attributed information of the file specified or selected by a pointing function of the track pad 82. The context menu as used herein means a function to pop up display a selectable processing on the screen of the display 86.

By forming at least any one kind of the keys and the button switches 83a, 83b of the above keyboard 81 from the dark bluish ceramics of the present invention, the dark bluish color tone makes users to feel the sense of stateliness, the high-grade impression and the aesthetic satisfaction, and allows users to have satisfying feeling of owning the note PC 80 of such color tone by a dignified and atmospheric color tone.

A description was made using the mobile phone 60 and the note-type personal computer 80 as an example of mobile terminals. However, application of the ceramics for decorative component of the present invention to mobile terminal is not limited to the mobile phone60 and the note-type personal computer 80. The present invention can be applied to various portable information terminals, whose components are required to have decorative value, such as portable information terminal (PDA: Personal Digital Assistant), portable car navigation system and portable audio player.

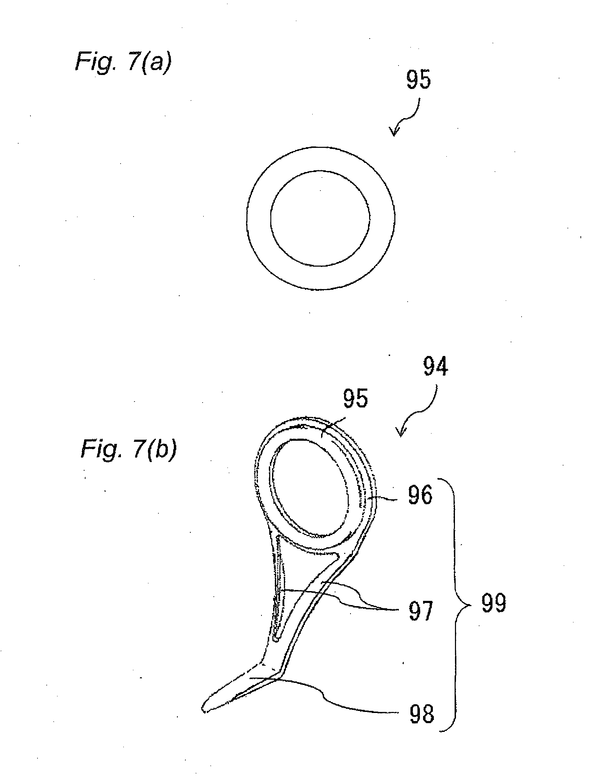

Next, Fig. 7 shows a fish line guide ring that is a decorative component for fish line guide of the present invention, and an example of a fish line guide provided with the fish line guide ring, Fig. 7(a) is a plan view of the fish line guide ring, and Fig. 7(b) is a perspective view of a fish line guide provided with the fish line guide ring shown in Fig. 7(a).

The fish line guide ring 95 as an example shown in Fig. 7 is used to guide a fish line (not shown) inserted through the inside thereof. The fish line guide 94 is made by incorporating the fish line guide ring 95 to a frame 99 which comprises a holding section 96 for holding the fish line guide ring 95, a support section 97 for the holding section 96 and a mount section 98 fastened onto a fishing rod (not shown) being integrally formed. The fish line guide ring 95 of dark bluish ceramics can be preferably used for a fishing tackle, since by forming the fish line guide ring 95 from the dark bluish ceramics of the present invention, it has favorable coordination with color tone of the fishing line guide 94 and the fishing rod, and can have the sense of stateliness by a dignified and atmospheric color tone. The fish line guide ring 95 may be coated on the surface thereof with a transparent film having high wear resistance, for example, a film made of hard amorphous carbon thereby further improving the wear resistance.

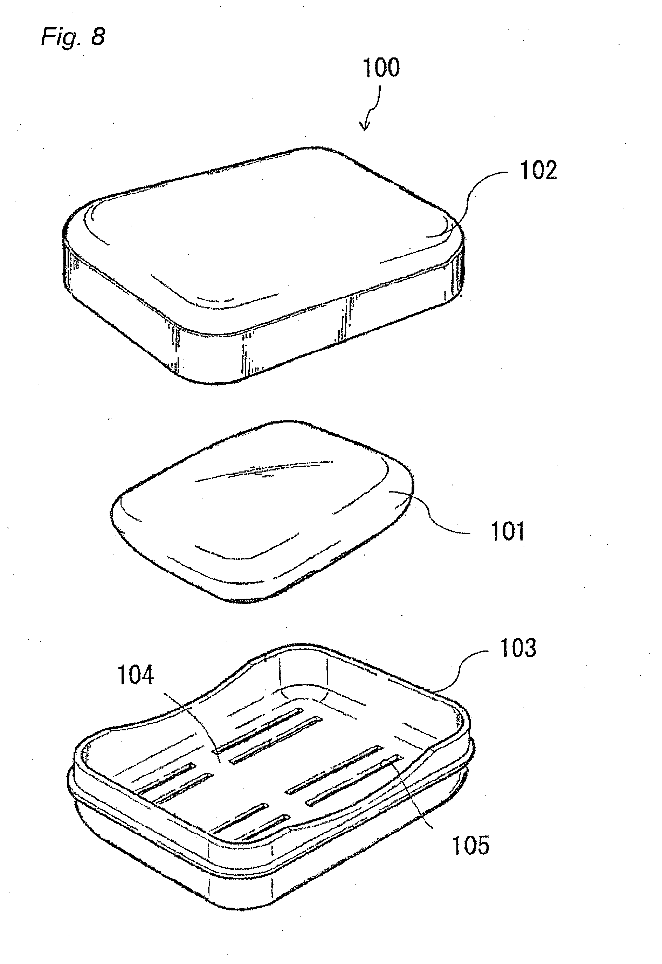

Next, Fig. 8 is a schematic diagram showing an example of constitution of a soap case that is a decorative component for daily life articles of the present invention. The soap case 100 consists of a case body 103 and a cap 102, wherein a placing surface 104 of the case body 103 whereon a soap 101 is to be placed includes draining slits 105 for draining water carried by the soap 101 formed therein. When the soap 101 is not used, the soap 101 is placed on the placing surface 104 of the case body 103, and is accommodated by putting the cap 102 onto the case body 103. When the soap 101 is used, the cap 102 is removed from the case body 103 to take out the soap 101 therefrom. By placing the soap 101 on the placing surface 104 of the case body 103 after use, water adhered on the soap 101 can be drained through the drain slits 105, so as to prevent the soap 101 from being soaked with water.

By forming the cap 102 and the case body 103 of the soap case 100 from the dark bluish ceramics of the present invention, it is made possible to make users to feel the sense of stateliness, the high-grade impression, and the aesthetic satisfaction, thus making it possible to make the users calm and composed by a dignified and atmospheric color tone.

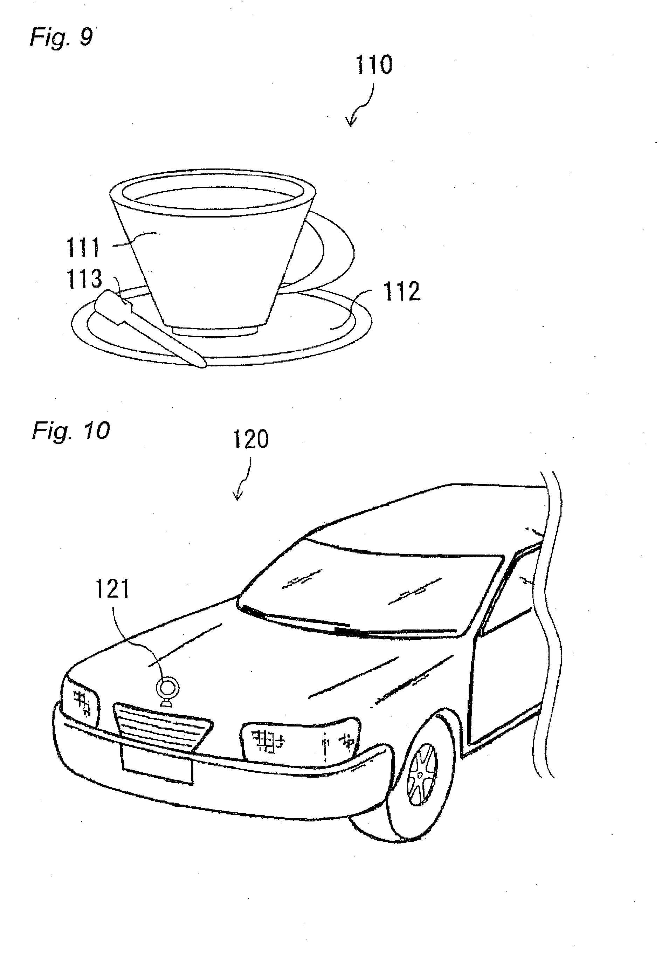

Next, Fig. 9 is a perspective view showing an example of a coffee cup set that is another example of a decorative component for daily life articles of the present invention.

The coffee cup set 110 shown in Fig. 9 consists of a coffee cup 111, a saucer 112 and a spoon 113. By forming the coffee cup 111, the saucer 112 and the spoon 113 from the dark bluish ceramics of the present invention, it is made possible to allow users to have satisfying feeling of owning it, to make them to feel the high-grade impression, the aesthetic satisfaction, and the spiritual comfort through visual sense during use.

Since the dark bluish ceramics of the present invention has favorable property for color coordination, at least one of the coffee cup 111, the saucer 112 and the spoon 113 can be formed from the dark bluish ceramics of the present invention, and can also be used in combination with other members having different color tones.

The decorative component for daily life articles of the present invention can be preferably applied to, in addition to the soap case 100 and the coffee cup set 110, the handle of tooth brush or shaver, earpick, scissors and other decorative component for daily life articles. By using the dark bluish ceramics of the present invention for toiletry goods marked with various logos in the bath rooms and toilet rooms of a luxury hotel, it is made possible to make users to feel a strong sense of aesthetic satisfaction.

Next, Fig. 10 is a perspective view showing an example of a vehicle body having a decorative component for vehicle parts of the present invention mounted thereon.

The vehicle body 120 shown in Fig. 10 has an emblem 121 which is decorative component for vehicle parts mounted thereon. By forming the emblem 121 from the dark bluish ceramics of the present invention, it is made possible to improve the decorative value of the vehicle body 120, to make users to feel the high-grade impression and the aesthetic satisfaction through visual sense. While Fig. 10 shows the emblem 121 that is mounted on the front of the vehicle body 120, decorative value of the vehicle body 120 can be improved also by attaching the emblem 121 formed from the dark bluish ceramics of the present invention showing the manufacturer's name or the model name, onto a rear of the vehicle body 120.

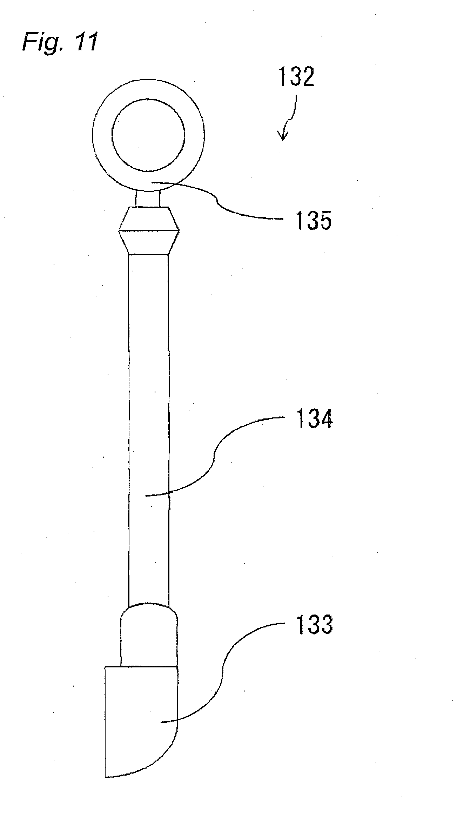

Fig. 11 is a front view showing an example of corner pole that uses the decorative component for vehicle parts of the present invention.

The corner pole 132 shown in Fig. 11 is installed so as to mark the left front corner of the vehicle (in the case of a right-hand drive vehicle) which is difficult to be seen from the driver seat when moving in or out of a parking lot, and comprises a mount 133 to be fastened onto the vehicle body, a pole unit 134 and a lighting unit 135 consisting of LED or the like. It is preferred to form the pole unit 134 of the corner pole 132 from the dark bluish ceramics of the present invention, or to mount the emblem formed from the dark bluish ceramics of the present invention thereto instead of the lighting unit 135, since doing so makes to improve decorative value of the vehicle body as well as of the corner pole 132.

In addition to the emblem 121 and the corner pole 132, the decorative component for vehicle parts of the present invention may be applied to a part of wheel cap, a part of hood ornament mounted on the bonnet of the vehicle body, small articles and accessories installed within the vehicle or a part thereof. This is preferable because of favorable effect of improving the decorative value.

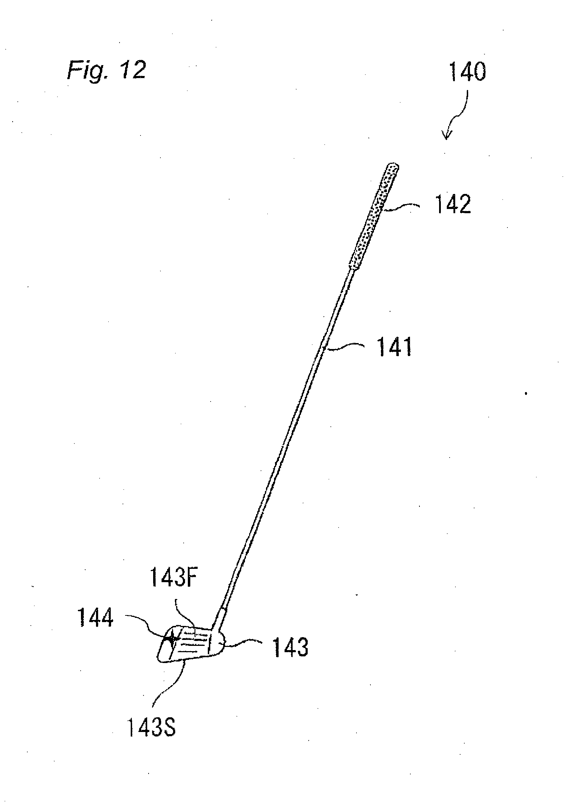

Next, Fig. 12 is a front view showing an example of golf club that uses the decorative component for sports goods of the present invention.

The golf club 140 shown in Fig. 12 includes a shaft 141, a grip 142 attached to one end of the shaft 141 and a head 143 attached to the other end of the shaft 141. The head 143 includes an impact face 143F that hits a golf ball, and a sole surface 143S that touches the ground. It is preferred to embed an accessory 144 formed from the dark bluish ceramics of the present invention into the impact face 143F, in the golf club 140 as shown in Fig. 12, since the decorative value is improved. It is preferred that, in addition to the impact face 143F, the accessory 144 formed from the dark bluish ceramics of the present invention is embedded in the sole surface 143S or the grip 142.

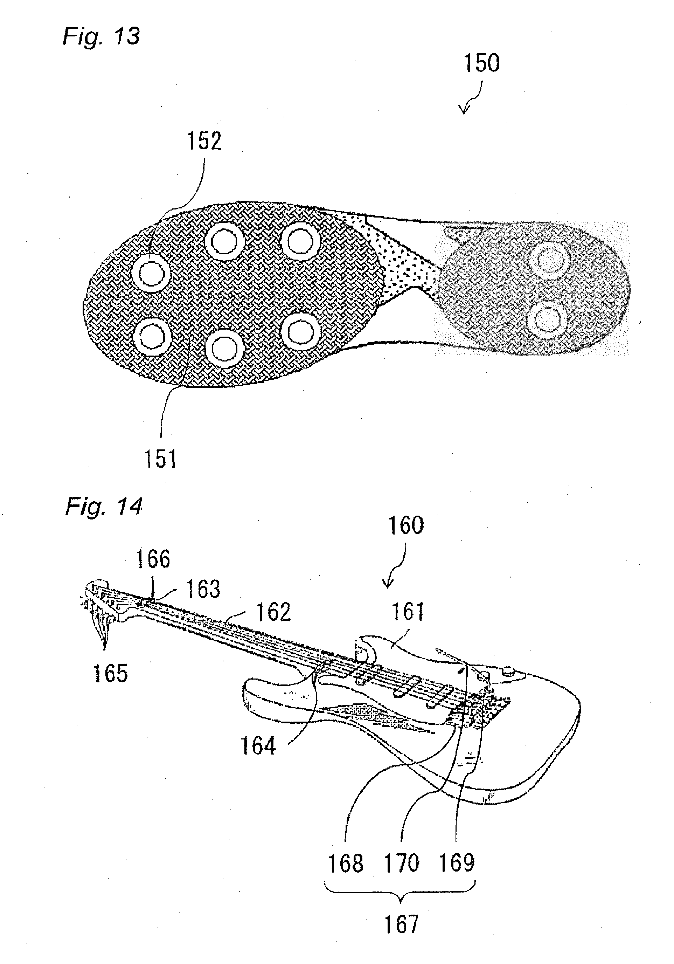

Fig. 13 is a bottom view showing an example of spike shoes that uses the decorative component for sports goods of the present invention.

The spike shoes 150 shown in Fig. 13 are used in, for example, soccer or rugby, and has a plurality of studs 152 planted in sole 151 to protrude therefrom so as to stabilize a pivot foot when kicking a ball. The studs 152 formed from the ceramics for decorative component of the present invention have the effects of, besides the improvement in decorative value, higher wear resistance than that of studs made of aluminum alloy that have hitherto been used, so as to decrease the frequency of replacement of the studs 152, and thereby reducing the cost incurred from the replacement. The studs 152 may be covered by a transparent resin to prevent the studs 152 from being chipped during a game.

Next, Fig. 14 is a perspective view showing an example of guitar that uses the decorative component for musical instrument of the present invention.

The guitar 160 shown in Fig. 14 consists mainly of a body 161 and a neck 162 that extends forward from the body 161. Disposed near a distal end of the neck 162 is a nut 163, and a tuning peg 165 capable of adjusting the tension of the string 164 is provided beyond the nut 163 for each of strings 164. A clamp mechanism 166 is provided near the nut 163 so as to hold the strings 164 and to prevent it from moving with respect to the nut 163.

The body 161 has a tremolo arm 167 for producing impressive sound effect by increasing or decreasing the tensions of the strings 164 at the same time. The tremolo arm 167 includes: a base plate 168 that is attached to the body 161; a bridge saddle 169 that is held on the base plate 168 and holds the strings 164 in tunable state; and a tremolo bar 170 that actuates the tremolo arm 167. By forming the base plate 168, the bridge saddle 169, the tremolo bar 170 or the like of this guitar 160 from the dark bluish ceramics of the present invention, it is made possible to improve the decorative value of the guitar 160. This provides the joy of possessing the guitar 160 and helps to captivate a large audience.

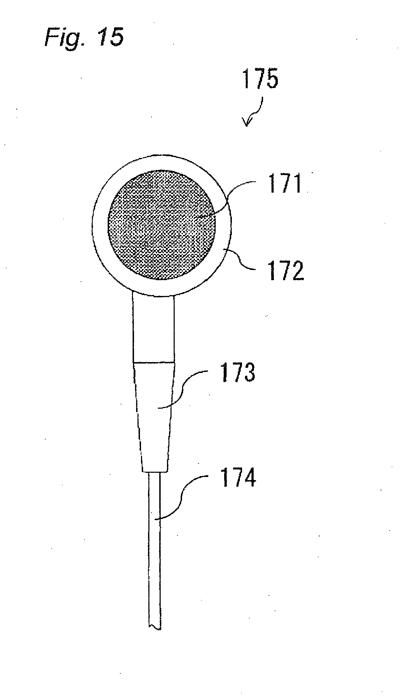

Next, Fig. 15 is a front view showing an example of earphone unit that uses the decorative component for accessory of the present invention.

The earphone unit 175 shown in Fig. 15 includes a speaker 171 that is inserted into the ear of the listener to produce sound waves, a case 172 that houses the speaker 171, and a cord 174 that feeds electric signals to the speaker 171 via a lead 173 that is in contact with the case 172.

By forming the case 172 of the earphone unit 175 from the dark bluish ceramics of the present invention, it is made possible to improve the decorative value, to make users to feel the high-grade impression and the aesthetic satisfaction through visual sense.

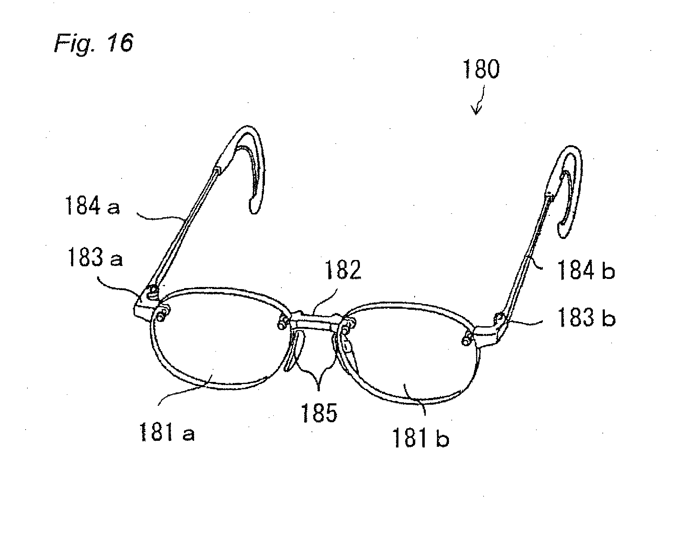

Fig. 16 is a perspective view showing an example of eyeglass frame that uses the decorative component for accessory of the present invention.

The eyeglasses 180 shown in Fig. 16 includes: a pair of lenses 181a, 181b that provide vision correction or protection of eyes against ultraviolet rays; a bridge 182 that links the pair of lenses 181a, 181b together; armors 183a, 183b that connect to the respective lenses 181a, 181b; temples 184a, 184b that connect to the armors 183a, 183b so as to be capable of swiveling through the hinge; and a nose pad 185 attached via nose pad link members to the lenses 181a, 181b, respectively.

By forming at least one of the bridge 182, the temples 184a, 184b and the nose pad 185 of this eyeglasses 180 from the dark bluish ceramics of the present invention, it is made possible to improve the fashionability and the decorative value, to allow users to have satisfying feeling of owning it, to make users to feel the high-grade impression and the aesthetic satisfaction through visual sense.

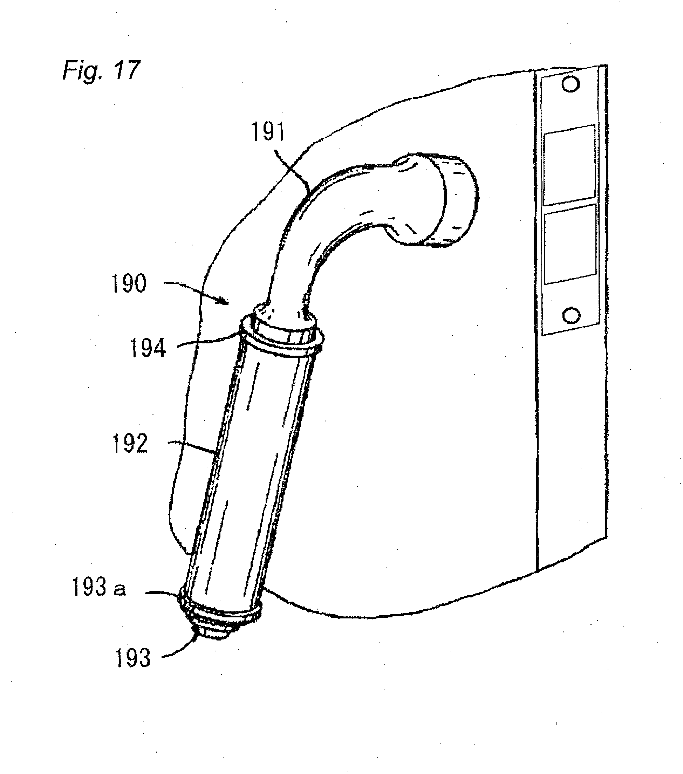

Next, Fig. 17 is a perspective view showing an example of grip for door handle that uses the decorative component for architectural materials of the present invention.

A door handle 190 shown in Fig. 17 includes a body 191 extending in an L-shape and a cylindrical grip 192 fitted to the end of the body 191, and the grip 192 is fixed to the body 191 by pressing the grip 192 by means of a nut 193 having a flange 193a formed thereon, from an anterior end of the grip 192, and a flange 194, from a posterior end of the grip 192.

By forming the grip 192 of the door handle 190 from the dark bluish ceramics of the present invention, it is made possible to provide the decorative component for architectural materials for improving the decorative value, making users to feel the high-grade impression and the aesthetic satisfaction through visual sense.

An example of the method for producing the dark bluish ceramics of the present invention will be described below.

In order to obtain the dark bluish ceramics of the present invention, first, weighing is conducted so that the content of a powder of aluminum oxide ($Al_2O_3$) is in a range from 1 to 30% by mass, the content of a powder of cobalt oxide (CoO or $Co_3O_4$) is in a range from 0.5 to 5% by mass, the content of a powder of at least one kind selected from chlome oxide ($Cr_2O_3$), nickle oxide (NiO) and iron oxide ($Fe_2O_3$) is no more than 1% by mass (except for 0% by mass), and the remainder is a powder of zirconium oxide ($ZrO_2$). Meanwhile, the powder of zirconium oxide may be a mixed powder comprising 95 to 99 mol% of a powder of zirconium oxide and 1 to 5 mol% of a powder of at least one kind of a stabilizing agent selected from yttrium oxide ($Y_2O_3$), cerium oxide ($CeO_2$), dysprosium oxide (DyO), magnesium oxide (MgO), neodymium oxide ($Nd_2O_3$) and calcium oxide (CaO) or a powder of zirconium oxide produced by adding a stabilizing agent using a coprecipitation method. The respective powders thus weighed and water as a solvent are charged in a vibrating mill or a ball mill, followed by mixing and grinding. Also, 0.5 to 3% by mass of a powder of hafnium oxide may be added, in addition to the respective powders, or a powder of zirconia comprising 0.5 to 3% by mass of a powder of hafnium oxide may be used.

It is likely that balls used in mixing and grinding exert an influence on the color tone of the dark bluish ceramics of the present invention. Therefore, it is preferred to use balls having a composition identical or analogical with that of the dark bluish ceramics of the present invention, and having the values of the lightness index L* and chromaticness indices a* and b* in the L*a*b* color space of CIE1976 of the surface similar to the values thereof.

Next, a predetermined amount of paraffin wax as a binder is added to a slurry obtained by mixing and grinding, and the mixture is dried by a spray drying method to obtain granules. The obtained granules are formed into a desired shape such as a disk, a flat plate, a columnar body, a circular ring or the like by a desired molding method, for example, a dry pressure molding method, a cold isostatic pressure molding method or the like. If the product has a complicated shape, a molding may be obtained by a cast molding method or an injection molding method using a slurry prepared by adding a solvent, a binder or the like to the slurry obtained by mixing and grinding. It is also possible to obtain a molding by forming into a block shape or a shape close to a shape of the product by various molding methods, followed by cutting. The obtained molding is optionally degreased and then fired in an air atmosphere to obtain a sintered body.

At this time, when the sintering temperature is low, the degree of sintering is not sufficient. In contrast, when the sintering temperature is high, crystals of the sintered body causes abnormal grain growth and mechanical properties deteriorate. Therefore, it is preferable to sinter the dark bluish ceramics of the present invention at a temperature of not lower than 1,350°C nor higher than 1,500°C. By sintering it at the temperature within the above range, the dark bluish ceramics can attain the apparent density in a range of not less than 5.9 g/cm$^3$ nor more than 6.1 g/cm$^3$, thus making it possible to obtain the dark bluish ceramics with excellent mechanical properties without causing insufficient sintering or abnormal grain growth of crystals of the sintered body.

As a result of barrel polishing of the obtained sintered body, it is possible to obtain the dark bluish ceramics of the present invention in which the surface of the sintered body would be turned into a decorative surface of dark bluish color tone that makes many users to feel the high-grade impression, the aesthetic satisfaction, and the spiritual comfort. Barrel polishing may be conducted for about 24 hours by a wet type centrifugal barrel polisher using media and green carborundum (GC). Before barrel polishing, the sintered body may be optionally subjected to grinding work so as to impart a shape of the product. It is also possible to conduct a lapping operation by feeding a diamond paste having a small mean particle size of not more than 1 μm to a lapping machine made of tin.

When a dry pressure molding method is selected as the molding method, the molding pressure exerts an influence on the occupied area ratio of open voids in the surface, maximum aperture diameter of open voids, and Vickers hardness (Hv). When the molding pressure is increased, it is possible to decrease the occupied area ratio and maximum aperture diameter of open voids and to increase Vickers hardness (Hv). In order to obtain dark bluish color tone of the present invention, the molding pressure is preferably controlled to not less than 49 MPa nor more than 196 MPa. When the molding pressure is controlled in the above range, it is possible to control the occupied area ratio of open voids in the surface of the dark bluish color tone of the present invention to not more than 0.2% and to increase Vickers hardness (Hv) to not less than 8GPa, and to elongate service life of the molding die. In particular, the molding pressure is more preferably not less than 96 MPa nor more than 196 MPa because the maximum aperture diameter of open voids in the surface can be controlled to not more than 50 μm.

The dark bluish ceramics obtained described above of the present invention develops dark bluish color tone that makes users to feel the sense of stateliness, the high-grade impression and the aesthetic satisfaction. Therefore, the dark bluish ceramics of the present invention can be preferably used in a decorative component for watch, such as watch case or watch band links etc.; a decorative component for mobile terminal such as various keys that are operated by pushing, and case etc.; a decorative component for fish line guide, such as a fish line guide ring etc.; a decorative component for daily life articles, such as a soap case or a coffee cup set etc.; a decorative component for vehicle parts, such as an emblem of a manufacturer or a model name, or a corner pole etc.; a decorative component for sports goods, such as an accessory of a golf club, or studs of spiked shoes etc.; a decorative component for musical instrument, such as a base plate of a guitar etc.; a decorative component for accessory, such as a case of an earphone unit, or a bridge of eyeglasses etc.; and decorative component for architectural materials, such as door handle etc.

In addition to these, the dark bluish ceramics of the present invention can be preferably used in a decorative component for accessory, such as broach, necklace, earring, ring, bracelet, anklet, tiepin, tie tack, medal, button, knife, folk, handle of tooth brush or shaver, earpick, scissors, materials for seals, and business card; a decorative component for architectural materials, such as tiles for decorating floor, wall and ceiling; and another decorative components for household appliances. If decorativeness is required to the parts, the dark bluish ceramics of the present invention can also be preferably used in a wristwatch type mobile phone having both of a function of a watch and a function of a mobile phone as a result of complexation of the watch and the mobile phone.

Example 1

Examples of the present invention will be specifically described, but the present invention is not limited to the following Examples.

After weighing in order that the contents of the respective powders of aluminum oxide, cobalt oxide and chromium oxide become the contents shown in Table 1 based on 100% by mass of a mixed powder comprising 98% by mol of a powder of zirconium oxide ($ZrO_2$) and 2% by mol of a powder of yttrium oxide ($Y_2O_3$) as a stabilizing agent, these materials were charged in a vibrating mill, together with water as a solvent, followed by mixing and grinding. In the case of mixing and grinding, balls that contain zirconia as the main component and develop dark bluish color tone were used.

Next, a predetermined amount of paraffin wax as a binder was added to slurry obtained by mixing and grinding, and the mixture was dried by a spray drying method to obtain granules. For each specimen, a plurality of moldings that would be turned into inner links 20 of band links shown in Fig. 3 were made under a pressure of 98 MPa by a dry pressure molding method, and the obtained moldings were sintered at 1,450°C to obtain sintered bodies. The obtained sintered bodies were put in a centrifugal barrel polisher using media and green carborundum (GC) and then subjected to wet type barrel polishing for 24 hours to obtain each sample of the inner links 20 of band links.

The values of the lightness index L* and the chromaticness indices a* and b* in the L*a*b* color space of CIE1976 of the decorative surface of inner links 20 of band links were measured in accordance with JIS Z 8722-2000, using a colorimeter (CR-221, manufactured by the former Minolta Co., Ltd.) in combination with a CIE standard light source D65 as a light source in a light receiving method set under the conditions a ((45-n) [45-0]) with the measurement diameter being set to 3 mm.

The color tone of the inner links 20 was evaluated by 50 monitors comprising 5 male and 5 female monitors in Europe in each of 5 age brackets from 20s to 60s, by responding to questionnaire asking how they felt about 3 items of quality; the sense of stateliness, the high-grade impression and the aesthetic satisfaction. The percentage of the monitors responded positively for these items among the total number of the monitors was calculated and evaluated as follows:

a sample having three items, each percentage of which is not less than 90%, was rated as "superior"; a sample having at least one item, the percentage of which is not less than 80% nor more than 90%, was rated as "good"; and a sample having at least one item, the percentage of which is not more than 80%, was rated as "inferior." Evaluation by monitors was conducted in a state where inner links 20 of a plurality of samples like watch bands are arranged.

The respective contents of aluminum oxide, cobalt oxide and chromium oxide were obtained by semi-quantitative analysis of elements using an X-ray fluorescence analyzer by a FP method, and converting the content to that of oxide. The results are shown in Table 1.

[Table 1]

| Sample No. | aluminum oxide (% by mass) | cobalt oxide (% by mass) | chromium oxide (% by mass) | Lightness index | Chromaticness indices | | sense of stateliness (%) | high-grade impression (%) | aesthetic satisfaction (%) | Monitors evaluation |
|---|---|---|---|---|---|---|---|---|---|---|
| | | | | L* | a* | b* | | | | |
| * 1 | 0.9 | 2.0 | 0.5 | 9 | 26.0 | -50.1 | 74 | 80 | 84 | inferior |
| 2 | 1.0 | 2.0 | 0.5 | 12 | 25.8 | -50.3 | 84 | 88 | 86 | good |
| 3 | 5.0 | 2.0 | 0.5 | 15 | 26.2 | -51.1 | 90 | 94 | 94 | superior |
| 4 | 10.0 | 2.0 | 0.5 | 21 | 26.8 | -51.8 | 96 | 94 | 96 | superior |
| 5 | 20.0 | 2.0 | 0.5 | 25 | 27.3 | -52.8 | 94 | 90 | 92 | superior |
| 6 | 30.0 | 2.0 | 0.5 | 29 | 28.5 | -52.3 | 86 | 90 | 88 | good |
| * 7 | 30.1 | 2.0 | 0.5 | 31 | 28.2 | -53.5 | 74 | 86 | 84 | inferior |
| * 8 | 3.0 | 0.4 | 0.5 | 17 | 24.5 | -19.4 | 82 | 78 | 84 | inferior |
| 9 | 3.0 | 0.5 | 0.5 | 15 | 25.1 | -21.1 | 88 | 82 | 92 | good |
| 10 | 3.0 | 2.0 | 0.5 | 14 | 25.9 | -38.2 | 92 | 94 | 98 | superior |
| 11 | 3.0 | 5.0 | 0.5 | 12 | 26.2 | -54.5 | 86 | 84 | 88 | good |
| * 12 | 3.0 | 5.1 | 0.5 | 10 | 27.9 | -56.8 | 78 | 74 | 80 | inferior |
| 13 | 3.0 | 2.0 | 0.1 | 18 | 23.6 | -48.2 | 90 | 90 | 92 | superior |
| 14 | 3.0 | 2.0 | 0.3 | 17 | 18.1 | -44.8 | 92 | 94 | 94 | superior |
| 15 | 3.0 | 2.0 | 0.5 | 16 | 11.2 | -41.2 | 94 | 96 | 90 | superior |
| 16 | 3.0 | 2.0 | 0.7 | 14 | 7.5 | -37.4 | 92 | 90 | 92 | superior |
| 17 | 3.0 | 2.0 | 1.0 | 13 | 5.1 | -32.1 | 90 | 88 | 84 | good |
| * 18 | 3.0 | 2.0 | 1.1 | 12 | 3.5 | -31.5 | 76 | 80 | 82 | inferior |
| * 19 | 3.0 | 2.0 | 0 | 19 | 30.8 | -58.9 | 70 | 76 | 74 | inferior |
| * 20 | 3.0 | 0 | 0.5 | 59 | 2.1 | -5.5 | 74 | 76 | 72 | inferior |
| * 21 | 3.0 | 0 | 0 | 89 | 0.2 | 1.1 | 66 | 74 | 74 | inferior |
| * 22 | 0 | 2.0 | 0.5 | 33 | 4.8 | -26.2 | 72 | 72 | 72 | inferior |
| * 23 | 0 | 2.0 | 0 | 57 | 3.2 | -61.7 | 68 | 70 | 70 | inferior |

EP 2 336 097 B1

13

(continued)

| Sample No. | aluminum oxide (% by mass) | cobalt oxide (% by mass) | chromium oxide (% by mass) | Lightness index | Chromaticness indices | | | sense of stateliness (%) | high-grade impression (%) | aesthetic satisfaction (%) | Monitors evaluation |
|---|---|---|---|---|---|---|---|---|---|---|---|
| | | | | L* | a* | b* | | | | | |
| * 24 | 0 | 0 | 0.5 | 75 | 2.5 | 3.6 | 64 | 64 | 62 | inferior |
| Sample marked with * is out of the scope of the present invention. | | | | | | | | | | | |

From the results shown in Table 1, samples Nos. 1 and 7 (which are beyond the scope of the present invention) got poor evaluation, since the color tone of those samples failed to make many monitors to feel the sense of stateliness due to having the content of aluminum oxide less than 1% by mass or more than 30% by mass. Samples Nos. 8 and 12 (which are beyond the scope of the present invention) got poor evaluation, since the color tone of those samples failed to make many monitors to feel the high-grade impression due to having the content of cobalt oxide less than 0.5% by mass or more than 5% by mass. Sample No. 18 (which is beyond the scope of the present invention) got poor evaluation, since the color of this sample was darkened and blue color tone was lessened due to having the content of chromium oxide more than 1% by mass, and thus it failed to develop the dark bluish color tone. Samples Nos. 19-24 (which are beyond the scope of the present invention) got poor evaluation, since each sample failed to develop the dark bluish color tone due to lacking one or two among aluminum oxide, cobalt oxide and chromium oxide.

In contrast, in the monitor's evaluation of each of samples Nos. 2-6, 9-11 and 13-17, each of the sense of stateliness, the high-grade impression and the aesthetic satisfaction was not less than 80%, thus each sample got "good" evaluation. In particular, each of samples Nos. 3-5, 10, 13 and 14 has the value of the lightness index L* in a range of not less than 14 nor more than 25, the value of the chromaticness index a* not less than 0 nor more than 28 and the chromaticness index b* not less than -25 nor more than -53 in the L*a*b* color space of CIE1976 of the decorative surface. Therefore, it can develop the dark bluish color tone full of the sense of stateliness and make it possible to make almost all monitors to feel the high-grade impression and the aesthetic satisfaction, and thus each sample got "superior" evaluation.

Example 2

Next, weighing was conducted in order that the content of aluminum oxide, cobalt oxide and nickel oxide become the contents shown in Table 2 based on 100% by mass of a mixed powder comprising 98% by mol of a powder of zirconium oxide and 2% by mol of a powder of yttrium oxide as a stabilizing agent, and a plurality of inner links 20 of band links per each sample were produced by the same production method as in Example 1.

The values of the lightness index L* and the chromaticness indices a* and b* in the L*a*b* color space of CIE1976 of the decorative surface of inner links 20 of band links were measured using a colorimeter in the same manner as in Example 1. Evaluation by monitors was conducted in a state where inner links 20 of a plurality of samples are arranged like watch bands by responding to questionnaire asking how they felt about 3 items of the sense of stateliness, the high-grade impression and the aesthetic satisfaction. In addition, the respective contents of aluminum oxide, cobalt oxide and nickel oxide were obtained by semi-quantitative analysis of elements using an X-ray fluorescence analyzer by a FP method, and converting the content to that of oxide. The results are shown in Table 2.

[Table 2]

| Sample No. | aluminum oxide (% by mass) | cobalt oxide (% by mass) | nickel oxide (% by mass) | Lightness index | Chromaticness indices | | | sense of stateliness (%) | high-grade impresssion (%) | aesthetic satisfaction (%) | Monitors evaluation |
|---|---|---|---|---|---|---|---|---|---|---|---|
| | | | | L* | a* | b* | | | | | |
| *25 | 0.9 | 2.0 | 0.5 | 8 | 21.4 | -47.3 | 76 | 80 | 82 | inferior |
| 26 | 1.0 | 2.0 | 0.5 | 10 | 22.3 | -48.2 | 82 | 82 | 84 | good |
| 27 | 5.0 | 2.0 | 0.5 | 16 | 24.2 | -50.5 | 92 | 90 | 90 | superior |
| 28 | 15.0 | 2.0 | 0.5 | 23 | 25.8 | -51.8 | 90 | 90 | 92 | superior |
| 29 | 30.0 | 2.0 | 0.5 | 30 | 27.9 | -53.2 | 84 | 84 | 86 | good |
| * 30 | 30.1 | 2.0 | 0.5 | 31 | 28.2 | -53.9 | 78 | 80 | 82 | inferior |
| * 31 | 3.0 | 0.4 | 0.5 | 21 | 21.8 | -18.8 | 74 | 82 | 82 | inferior |
| 32 | 3.0 | 0.5 | 0.5 | 21 | 22.2 | -21.0 | 82 | 84 | 86 | good |
| 33 | 3.0 | 1.0 | 0.5 | 18 | 24.1 | -28.9 | 92 | 92 | 92 | superior |
| 34 | 3.0 | 3.0 | 0.5 | 15 | 25.9 | -42.6 | 90 | 94 | 92 | superior |
| 35 | 3.0 | 5.0 | 0.5 | 13 | 27.8 | -54.1 | 80 | 86 | 88 | good |
| * 36 | 3.0 | 5.1 | 0.5 | 12 | 28.5 | -58.2 | 78 | 82 | 84 | inferior |
| 37 | 3.0 | 2.0 | 0.1 | 20 | 28.9 | -47.6 | 82 | 84 | 86 | good |
| 38 | 3.0 | 2.0 | 0.3 | 19 | 27.2 | -49.0 | 92 | 94 | 94 | superior |
| 39 | 3.0 | 2.0 | 0.5 | 18 | 25.8 | -50.1 | 96 | 94 | 98 | superior |
| 40 | 3.0 | 2.0 | 0.7 | 18 | 24.4 | -52.6 | 94 | 92 | 96 | superior |
| 41 | 3.0 | 2.0 | 1.0 | 16 | 23.1 | -54.7 | 84 | 84 | 86 | good |
| * 42 | 3.0 | 2.0 | 1.1 | 15 | 22.8 | -56.3 | 74 | 80 | 82 | inferior |
| * 43 | 3.0 | 2.0 | 0 | 19 | 30.8 | -58.9 | 70 | 76 | 74 | inferior |
| Sample marked with * is out of the scope of the present invention. | | | | | | | | | | | |

From the results shown in Table 2, samples Nos. 25, 30, 31 and 36 (which are beyond the scope of the present invention) each having the content of aluminum oxide less than 1% by mass or more than 30% by mass or the content of cobalt oxide less than 0.5% by mass or more than 5% by mass failed to develop a color tone making many monitors to feel the sense of stateliness, and got poor evaluation. Sample No. 42 (which is also beyond the scope of the present invention) developed a color which was darkened and blue color tone was lessened due to having the content of chromium oxide more than 1% by mass, and thus it failed to develop the dark bluish color tone and got poor evaluation. Further, Sample No. 43 (which is also beyond the scope of the present invention) failed to develop the dark bluish color tone due to having no content of nickel oxide and got poor evaluation.

In contrast, in the monitor's evaluation of each of samples Nos. 26-29, 32-35 and 37-41, each of the sense of stateliness, the high-grade impression and the aesthetic satisfaction was not less than 80%, thus each sample got "good" evaluation. In particular, each of samples Nos. 27, 28, 33, 34 and 38-40 has the value of the lightness index L* in a range of not less than 14 nor more than 25, the value of the chromaticness index a* not less than 0 nor more than 28 and the chromaticness index b* not less than - 25 nor more than -53 in the L*a*b* color space of CIE1976 of the decorative surface. Therefore, it can develop the dark bluish color tone full of the sense of stateliness and make it possible to make almost all monitors to feel the high-grade impression and the aesthetic satisfaction, and thus each sample got "superior" evaluation.

Example 3

Next, weighing was conducted in order that the content of aluminum oxide, cobalt oxide and iron oxide become the contents shown in Table 3 based on 100% by mass of a mixed powder comprising 98% by mol of a powder of zirconium oxide and 2% by mol of a powder of yttrium oxide as a stabilizing agent, and a plurality of inner links 20 of band links per each sample were produced by the same production method as in Example 1.

The values of the lightness index L* and the chromaticness indices a* and b* in the L*a*b* color space of CIE1976 of the decorative surface of inner links 20 of band links were measured using a colorimeter (CR-221, manufactured by the former Minolta Co., Ltd.) in the same manner as in Example 1. Then evaluation was performed by conducting questionnaires to the monitors. In addition, the respective contents of aluminum oxide, cobalt oxide and nickel oxide were obtained by semi-quantitative analysis of elements using an X-ray fluorescence analyzer by a FP method, and converting the content to that of oxide. The results are shown in Tables 1-3.

[Table 3]

| Sample No. | aluminum oxide (% by mass) | cobalt oxide (% by mass) | iron oxide (% by mass) | Lightness index | Chromaticness indices | | sense of stateliness (%) | high-grade impression (%) | aesthetic satisfaction (%) | Monitors evaluation |
|---|---|---|---|---|---|---|---|---|---|---|
| | | | | L* | a* | b* | | | | |
| * 44 | 0.9 | 2.0 | 0.5 | 9 | -0.2 | -23.1 | 78 | 80 | 82 | inferior |
| 45 | 1.0 | 2.0 | 0.5 | 11 | -0.1 | -23.8 | 82 | 82 | 84 | good |
| 46 | 5.0 | 2.0 | 0.5 | 18 | 0.8 | -25.1 | 90 | 92 | 90 | superior |
| 47 | 15.0 | 2.0 | 0.5 | 23 | 2.5 | -26.5 | 92 | 94 | 92 | superior |
| 48 | 30.0 | 2.0 | 0.5 | 30 | 3.8 | -27.8 | 86 | 86 | 84 | good |
| * 49 | 30.1 | 2.0 | 0.5 | 31 | 4.0 | -28.1 | 76 | 80 | 82 | inferior |
| * 50 | 3.0 | 0.4 | 0.5 | 20 | -0.8 | -18.9 | 74 | 84 | 80 | inferior |
| 51 | 3.0 | 0.5 | 0.5 | 19 | -0.5 | -20.1 | 84 | 86 | 86 | good |
| 52 | 3.0 | 1.0 | 0.5 | 17 | 0.2 | -28.7 | 92 | 90 | 90 | superior |
| 53 | 3.0 | 3.0 | 0.5 | 14 | 0.8 | -41.4 | 94 | 90 | 92 | superior |
| 54 | 3.0 | 5.0 | 0.5 | 12 | 1.5 | -54.6 | 86 | 84 | 86 | good |
| * 55 | 3.0 | 5.1 | 0.5 | 12 | 1.8 | -56.2 | 78 | 82 | 84 | inferior |
| 56 | 3.0 | 2.0 | 0.1 | 18 | 8.0 | -32.1 | 94 | 96 | 98 | superior |
| 57 | 3.0 | 2.0 | 0.3 | 17 | 5.1 | -29.3 | 94 | 92 | 96 | superior |
| 58 | 3.0 | 2.0 | 0.5 | 15 | 0 | -25.4 | 96 | 96 | 98 | superior |
| 59 | 3.0 | 2.0 | 0.7 | 13 | -1.2 | -23.1 | 92 | 88 | 90 | good |
| 60 | 3.0 | 2.0 | 1.0 | 11 | -3.8 | -20.3 | 88 | 86 | 84 | good |
| * 61 | 3.0 | 2.0 | 1.1 | 10 | -4.5 | -16.1 | 74 | 80 | 82 | inferior |
| * 62 | 3.0 | 2.0 | 0 | 19 | 30.8 | -58.9 | 70 | 76 | 74 | inferior |
| Sample marked with * is out of the scope of the present invention. | | | | | | | | | | |

18

From the results shown in Table 3, samples Nos. 44, 49, 50 and 55 (which are beyond the scope of the present invention) each having the content of aluminum oxide less than 1% by mass or more than 30% by mass or the content of cobalt oxide less than 0.5% by mass or more than 5% by mass failed to develop a color tone making many monitors to feel the sense of stateliness and got poor evaluation. Sample No. 61 (which is also beyond the scope of the present invention) developed a color which was darkened and blue color tone was lessened due to having the content of iron oxide more than 1% by mass, and thus it failed to develop the dark bluish color tone and got poor evaluation. Further, Sample No. 62 (which is also beyond the scope of the present invention) failed to develop the dark bluish color tone due to having no content of iron oxide and got poor evaluation.

In contrast, in the monitor's evaluation of each of samples Nos. 45-48, 51-54 and 56-60, each of the sense of stateliness, the high-grade impression and the aesthetic satisfaction was not less than 80%, thus each sample got "good" evaluation. In particular, each of samples Nos. 46, 47, 52, 53 and 56-58 has the value of the lightness index $L^*$ in a range of not less than 14 nor more than 25, the value of the chromaticness index $a^*$ not less than 0 nor more than 28 and the chromaticness index $b^*$ not less than - 25 nor more than -53 in the $L^*a^*b^*$ color space of CIE1976 of the decorative surface. Therefore, it can develop the dark bluish color tone full of the sense of stateliness and make it possible to make almost all monitors to feel the high-grade impression and the aesthetic satisfaction, and thus each sample got "superior" evaluation.

Example 4

Next, a powder of zirconia containing the stabilizing agent similarly to Example 3, a powder of aluminum oxide and a powder of iron oxide were prepared and a powder containing merely CoO (Sample No. 63), a powder containing CoO and $Co_3O_4$ at a weight ratio of 50:50 (Sample No. 64) and a powder containing merely $Co_3O_4$ (Sample No. 65) were prepared. Then, weighing was conducted in order that the content of each sample becomes the contents shown in Table 4, and a plurality of inner links 20 of band links per each sample were produced by the same production method as in Example 3.

The values of the lightness index $L^*$ and the chromaticness indices $a^*$ and $b^*$ in the $L^*a^*b^*$ color space of CIE1976 of the decorative surface of inner links 20 of band links were measured using a colorimeter in the same manner as in Example 1. Evaluation by monitors was conducted in a state where inner links 20 of a plurality of samples are arranged like watch bands by responding to questionnaire asking how they felt about 3 items of the sense of stateliness, the high-grade impression and the aesthetic satisfaction. In addition, the respective contents of aluminum oxide, cobalt oxide and nickel oxide were obtained by semi-quantitative analysis of elements using an X-ray fluorescence analyzer by a FP method, and converting the content to that of oxide. In order to confirm the chemical configuration of the cobalt oxide contained in the samples, each sample was subjected to X-ray diffraction measurement using an X-ray diffraction apparatus, and the crystal peaks of CoO and $Co_3O_4$ were identified from thus obtained X-ray diffraction charts. The results are shown in Table 4.

[Table 4]

| Sample No. | aluminum oxide (% by mass) | cobalt oxide (% by mass) | iron oxide (% by mass) | results of X-ray diffraction | Lightness index | Chromaticness indices | | | sense of stateliness (%) | high-grade impression (%) | aesthetic satisfaction (%) |
|---|---|---|---|---|---|---|---|---|---|---|---|
| | | | | | L* | a* | b* | | | | |
| 63 | 3.0 | 2.0 | 0.5 | CoO | 18 | 8.0 | -32.0 | 92 | 90 | 92 |
| 64 | 3.0 | 2.0 | 0.5 | CoO, $CO_3O_4$ | 17 | 7.1 | -30.2 | 94 | 90 | 92 |
| 65 | 3.0 | 2.0 | 0.5 | CoO, $Co_3O_4$ | 16 | 5.8 | -28.8 | 96 | 92 | 92 |

From the results shown in Table 4, compared with Sample No. 49 in which cobalt oxide is made of CoO, samples Nos. 50 and 51 in which cobalt oxide is made of CoO and $Co_3O_4$ have slightly decreased values of the lightness index L* and the chromaticness index a* and slightly increased value of the chromaticness index b* and the evaluation of the sense of stateliness thereof among the monitor's evaluation was improved. Therefore, it was found that a dark color tone can be developed by containing cobalt oxide made of CoO and $Co_3O_4$.

Example 5

Next, the dark bluish ceramics of the present invention was examined for the presence or absence of added hafnium oxide, the alteration of the color tone resulted from the added amount thereof and the evaluation results made by the monitors.

First, weighing was conducted in order that the content of aluminum oxide, cobalt oxide, iron oxide and hafnium oxide become the contents shown in Table 5 based on 100 parts by mass of a mixed powder comprising 97% by mol of a powder of zirconium oxide and 3% by mol of a powder of yttrium oxide as a stabilizing agent, and a plurality of inner links 20 of band links per each sample were produced by the same production method as in Example 1.

Then the values of the lightness index L* and the chromaticness indices a* and b* in the L*a*b* color space of CIE1976 of the decorative surface of inner links 20 of band links were measured using a colorimeter in the same manner as in Example 1. Evaluation by monitors was conducted in a state where inner links 20 of a plurality of samples are arranged like watch bands by responding to questionnaire asking how they felt about 3 items of the sense of stateliness, the high-grade impression and the aesthetic satisfaction. In addition, the respective contents of aluminum oxide, cobalt oxide and nickel oxide were obtained by semi-quantitative analysis of elements using an X-ray fluorescence analyzer by a FP method, and converting the content to that of oxide. The results are shown in Table 5.

[Table 5]

| Sample No. | aluminum oxide (% by mass) | cobalt oxide (% by mass) | iron oxide (% by mass) | hafnium oxide (% by mass) | Lightness index | Chromaticness indices | | | sense of stateliness (%) | high-grade impresssion (%) | anesthetic satisfaction (%) |
|---|---|---|---|---|---|---|---|---|---|---|---|
| | | | | | L* | a* | b* | | | | |
| 66 | 3.0 | 2.0 | 0.5 | 0 | 18 | 8.0 | -32 | 92 | 90 | 92 |
| 67 | 3.0 | 2.0 | 0.5 | 0.5 | 18 | 6.8 | -30 | 92 | 92 | 94 |
| 68 | 3.0 | 2.0 | 0.5 | 1.8 | 17 | 5.2 | -29 | 94 | 92 | 94 |
| 69 | 3.0 | 2.0 | 0.5 | 3 | 16 | 3.8 | -27 | 94 | 94 | 96 |

From the results shown in Table 5, compared with Sample No. 66 in which hafnium oxide is absent, the evaluation results in the three items of the sense of stateliness, the high-grade impression and the aesthetic satisfaction was improved in samples Nos. 67-69 in which hafnium oxide is present. Thus, it was found that, since the ceramics contains hafnium oxide, the color tone was further darkened by causing fine differences of the refractive index of the light striking on the surface of the ceramics or reducing the translucent feeling of the ceramics, thereby the sense of stateliness was increased, the high-grade impression was furthermore improved and a higher aesthetic satisfaction was given to the users.

Example 6

Next, the dark bluish ceramics of the present invention was examined for the alteration of the color tone and the evaluation results made by the monitors, which were caused by the difference of the ratio of cobalt oxide to any one of chromium oxide, nickel oxide or iron oxide.

First, weighing was conducted in order that the content of aluminum oxide, cobalt oxide, chromium oxide, nickel oxide and iron oxide become the contents shown in Table 6 and the remainder is the zirconia containing stabilizing agent, and a plurality of inner links 20 of band links per each sample were produced by the same production method as in Example 1.

Then the values of the lightness index L* and the chromaticness indices a* and b* in the L*a*b* color space of CIE1976 of the decorative surface of inner links 20 of band links were measured using a colorimeter in the same manner as in Example 1. Evaluation by monitors was conducted in a state where inner links 20 of a plurality of samples are arranged like watch bands by responding to questionnaire asking how they felt about 3 items of the sense of stateliness, the high-grade impression and the aesthetic satisfaction. In addition, the respective contents of aluminum oxide, cobalt oxide, chromium oxide, nickel oxide and iron oxide were obtained by semi-quantitative analysis of elements using an X-ray fluorescence analyzer by a FP method, and converting the content to that of oxide. The results are shown in Table 6.

[Table 6]

| Sample No. | aluminum oxide (% by mass) | cobalt oxide (a) (% by mass) | added compound | added amount (b) (% by mass) | mass ratio a/b | Lightness index | Chromaticness indices | | | sense of stateliness (%) | high-grade impression (%) | aesthetic satisfaction (%) | Monitors evaluation |
|---|---|---|---|---|---|---|---|---|---|---|---|---|---|
| | | | | | | L* | a* | b* | | | | | |
| 70 | 3.0 | 1.0 | chromium oxide | 1.0 | 1 | 14 | 4.5 | -22.5 | 86 | 84 | 86 | good |
| 71 | 3.0 | 1.0 | chromium oxide | 0.5 | 2 | 16 | 21.3 | -26.3 | 92 | 90 | 90 | superior |
| 72 | 3.0 | 1.0 | chromium oxide | 0.2 | 5 | 18 | 27.5 | -31.1 | 92 | 92 | 92 | superior |
| 73 | 3.0 | 3.0 | chromium oxide | 0.3 | 10 | 16 | 17.5 | -41.5 | 94 | 94 | 92 | superior |
| 74 | 3.0 | 4.0 | chromium oxide | 0.2 | 20 | 15 | 27.8 | -51.8 | 92 | 94 | 90 | superior |
| 75 | 3.0 | 4.0 | chromium oxide | 0.16 | 25 | 17 | 29.2 | -53.6 | 88 | 88 | 84 | good |
| 76 | 3.0 | 1.0 | nickel oxide | 1.0 | 1 | 13 | 20.9 | -31.2 | 88 | 80 | 82 | good |
| 77 | 3.0 | 1.0 | nickel oxide | 0.5 | 2 | 18 | 24.1 | -28.9 | 92 | 90 | 92 | superior |
| 78 | 3.0 | 1.0 | nickel oxide | 0.2 | 5 | 20 | 26.3 | -27.1 | 94 | 92 | 92 | superior |
| 79 | 3.0 | 3.0 | nickel oxide | 0.3 | 10 | 18 | 26.8 | -41.8 | 98 | 96 | 98 | superior |
| 80 | 3.0 | 5.0 | nickel oxide | 0.25 | 20 | 14 | 28.0 | -51.9 | 94 | 92 | 94 | superior |
| 81 | 3.0 | 5.0 | nickel oxide | 0.2 | 25 | 15 | 28.7 | -50.5 | 86 | 88 | 88 | good |
| 82 | 3.0 | 1.0 | iron oxide | 1.0 | 1 | 12 | -3.5 | -20.3 | 86 | 88 | 88 | good |
| 83 | 3.0 | 1.0 | iron oxide | 0.5 | 2 | 17 | 0.2 | -28.7 | 90 | 90 | 92 | superior |
| 84 | 3.0 | 1.0 | iron oxide | 0.2 | 5 | 19 | 4.6 | -32.7 | 92 | 92 | 94 | superior |

(continued)

| Sample No. | aluminum oxide (% by mass) | cobalt oxide (a) (% by mass) | added compound | added amount (b) (% by mass) | mass ratio a/b | Lightness index | Chromaticness indices | | | sense of stateliness (%) | high-grade impression (%) | aesthetic satisfaction (%) | Monitors evaluation |
|---|---|---|---|---|---|---|---|---|---|---|---|---|---|
| | | | | | | L* | a* | b* | | | | | |
| 85 | 3.0 | 3.0 | iron oxide | 0.3 | 10 | 16 | 3.1 | -45.2 | 94 | 94 | 94 | superior |
| 86 | 3.0 | 4.0 | iron oxide | 0.2 | 20 | 14 | 5.3 | -52.1 | 92 | 90 | 92 | superior |
| 87 | 3.0 | 4.0 | iron oxide | 0.16 | 25 | 13 | 6.6 | -54.5 | 88 | 86 | 84 | good |

From the results shown in Table 6, samples Nos. 71-74, 77-80 and 83-86, each of which has a mass ratio of cobalt oxide to any one of chromium oxide, nickel oxide or iron oxide is in the range of 2 to 20, have higher evaluation results in the three items of the sense of stateliness, the high-grade impression and the aesthetic satisfaction, thereby being evaluated as "superior" compared with the samples which have the mass ratio less than 2 or more than 20. Thus, it was found that the dark bluish ceramics of the present invention having the ratio between cobalt oxide that influences the contrasting density of the blue color and any one of chromium oxide, nickel oxide or iron oxide that presents the dark color tone is suitably balanced, which is enriched with further dark tone and which makes it possible to make the users to feel the high-grade impression and the aesthetic satisfaction, can be prepared by adjusting the mass ratio of the ceramics within the above range.

Example 7

Next, the dark bluish ceramics of the present invention was examined to confirm the three-point bending strength and the ratio of the tetragonal crystal and the cubical crystal as well as the ratio of the monoclinic crystal for evaluating the heat resistance in the case of using yttrium oxide ($Y_2O_3$) and also in the case of using cerium oxide ($CeO_2$) and dysprosium oxide ($Dy_2O_3$) as the stabilizing agent for zirconia.

First, a powder of zirconium oxide ($ZrO_2$) and the stabilizing agents shown in Table 1 were mixed so as to become 100% by mol in total and weighing was conducted in order that the content of iron oxide ($Fe_2O_3$) becomes 3% by mass, the content of chromium oxide ($Cr_2O_3$) becomes 0.1% by mass and the content of aluminum oxide ($Al_2O_3$) becomes 0.3% by mass based on 100 parts by mass of the above mixture powder, and then these materials were charged in a vibrating mill, together with water as a solvent, followed by mixing and grinding.

First, a powder of zirconium oxide ($ZrO_2$) and the stabilizing agents shown in Table 7 were mixed so as to become 100% by mol in total, and weighing was conducted in order that the content of aluminum oxide ($Al_2O_3$), cobalt oxide (CoO) and nickel oxide (NiO) conform to the percentage the same as that of Sample No. 39 in Example 2 based on 100 parts by mass of the above mixture powder, and then these materials were charged in a vibrating mill, together with water as a solvent, followed by mixing and grinding, thereby obtaining a slurry in which merely an amount of the additive is varied. Thereafter, samples Nos. 88 to 105 each having the shape of the transverse fracture test piece according to JIS R 1601-1995 were prepared in the same method as in Example 1 (n=10).

Then, the three-point bending strength was measured in accordance with JIS R 1601-1995 with respect to each sample. Using a heating apparatus such as a heater, each sample was dried at a temperature of 150°C for 100 hours, and each sample was measured by X-ray diffraction. Then, the ratio of the monoclinic crystal Xm was calculated based on the following formula:

$$Xm = (Im(111) + Im(11\text{-}1)) / (Im(111) + Im(11\text{-}1) + Itc(111)) \times 100$$

[wherein Im(111) is a reflection peak strength (111) of the monoclinic zirconia, Im(11-1) is a reflection peak strength (11-1) of the monoclinic zirconia, and Itc(111) is a reflection peak strength (111) of the tetragonal zirconia and the cubic zirconia.]

The ratio of the cubic crystal and the tetragonal crystal was calculated by subtracting the ratio of the monoclinic crystal from 100. The ratio of the monoclinic crystal was used as the evaluation of heat resistance. The results are shown in Table 7.

[Table 7]

| Sample No. | yttrium compound (% by mol) | dysprosium compound (% by mol) | cerium compound (% by mol) | total content of stabilizing agent (% by mol) | three-point bending strength (MPa) | ratio of cubic crystal and tetragonal crystal (%) | ratio of monoclinic crystal (%) |
|---|---|---|---|---|---|---|---|
| 88 | 1.2 | - | - | 1.2 | 860 | 78 | 22 |
| 89 | 2.0 | - | - | 2.0 | 950 | 85 | 15 |
| 90 | 3.0 | - | - | 3.0 | 1010 | 94 | 6 |
| 91 | 4.0 | - | - | 4.0 | 940 | 95 | 5 |
| 92 | 4.2 | - | - | 5.0 | 880 | 94 | 6 |

(continued)

| Sample No. | yttrium compound (% by mol) | dysprosium compound (% by mol) | cerium compound (% by mol) | total content of stabilizing agent (% by mol) | three-point bending strength (MPa) | ratio of cubic crystal and tetragonal crystal (%) | ratio of monoclinic crystal (%) |
|---|---|---|---|---|---|---|---|
| 93 | - | 0.4 | 6.0 | 6.4 | 720 | 96 | 4 |
| 94 | - | 0.5 | 6.0 | 6.5 | 750 | 100 | 0 |
| 95 | - | 1.5 | 6.0 | 7.5 | 780 | 100 | 0 |
| 96 | - | 3.0 | 6.0 | 9.0 | 740 | 100 | 0 |
| 97 | - | 3.5 | 6.0 | 9.5 | 680 | 100 | 0 |
| 98 | - | 1.5 | 3.5 | 5.0 | 750 | 98 | 2 |
| 99 | - | 1.5 | 4.0 | 5.5 | 770 | 100 | 0 |
| 100 | - | 1.5 | 8.0 | 9.5 | 730 | 100 | 0 |
| 101 | - | 1.5 | 8.5 | 10.0 | 650 | 100 | 0 |
| 102 | - | 0.5 | 3.5 | 4.0 | 700 | 94 | 6 |
| 103 | - | 0.4 | 4.0 | 4.4 | 720 | 95 | 5 |
| 104 | - | 3.0 | 8.5 | 11.5 | 620 | 100 | 0 |
| 105 | - | 3.5 | 8.0 | 11.5 | 640 | 100 | 0 |

From the results shown in Table 7, each of samples Nos. 88 to 92, in which the stabilizing agent is yttrium oxide, had a higher value of three-point bending strength. In particular, it was found that each of samples Nos. 89 to 91 having the content thereof within the range of 2% to 4% by mol had the value of three-point bending strength more than 900 MPa, thereby attaining superior mechanical properties.

Samples Nos. 93 to 105 containing cerium oxide and dysprosium oxide as the stabilizing agents had a low ratio of monoclinic crystal, thereby attaining excellent heat resistance. In particular, it was found that each of Samples 94 to 96, 99 and 100 having the content of cerium oxide within the range of 4% to 8% by mol and dysprosium oxide within the range of 0.5% to 3% by mol had the value of three-point bending strength more than 700 MPa and the content of monoclinic crystal at 0% by mol, thereby attaining suitable mechanical properties and superior heat resistance.

Using the dark bluish ceramics of the present invention, a decorative component for watch, such as a watch case; a decorative component for mobile terminal, such as various operation keys used by being pressed down and a case in the mobile phone; a decorative component for daily life articles, such as a soap case or a coffee cup set; a decorative component for fishing line guide, such as a fishing line guide ring; a decorative component for vehicle parts, such as an emblem or a corner pole; a decorative component for sports goods, such as an accessory of a golf club or studs of spiked shoes; a decorative component for musical instrument, such as a base plate of a guitar; a decorative component for accessory, such as a case of an earphone unit, or a bridge of eyeglasses; and a decorative component for architectural materials, such as a door handle were produced. As a result, it was found that all decorative components develop dark bluish color tone accompanied with further elegant and dark tone, that makes it possible to make users to feel the sense of stateliness, the high-grade impression and the aesthetic satisfaction. Therefore, an attractive product can be formed by using the dark bluish ceramics of the present invention as the respective decorative components.

Description of Reference Numerals

10A, 10B: Watch case
20: Inner links
30: Outer links
40: Pin
50: Watch band
60: Mobile phone

80: Note-type personal computer (Note PC)
95: Fishing line guide
100: Soap case
110: Coffee cup set
121: Emblem
132: Corner pole
140: Golf club
150: spike shoes
160: Guitar
170: Earphone unit
180: Eyeglasses
190: Door handle

**Claims**

1. A dark bluish ceramics, comprising:

    zirconia containing stabilizing agent as a main component;
    aluminum oxide;
    cobalt oxide; and
    any one selected from a group consisting of chromium oxide, nickel oxide and iron oxide,
    wherein a content of the aluminum oxide is not less than 1% by mass nor more than 30% by mass,
    a content of the cobalt oxide is not less than 0.5% by mass nor more than 5% by mass,
    a content of any one selected from a group consisting of chromium oxide, nickel oxide and iron oxide is not less than 0.1% by mass nor more than 1% by mass, and
    the cobalt oxide consists of CoO and $Co_3O_4$.

2. The dark bluish ceramics according to Claim 1, further comprising hafnium oxide.

3. The dark bluish ceramics according to Claims 1 or 2, wherein a mass ratio of the mass of cobalt oxide to the mass of at least one selected from the group consisting of the chromium oxide, the nickel oxide and the iron oxide is not less than 2 nor more than 20.

4. The dark bluish ceramics according to any one of Claims 1 to 3, wherein the stabilizing agent is a compound containing yttrium or a compound containing cerium and a compound containing dysprosium.

5. The dark bluish ceramics according to Claim 4, wherein the stabilizing agent is a compound containing yttrium and the content thereof is not less than 2% by mol nor more than 4% by mol.

6. The dark bluish ceramics according to Claim 4 or 5, wherein the stabilizing agent is a compound containing cerium and a compound containing dysprosium and the total amount thereof is not less than 4.5% by mol nor more than 11% by mol.

7. The dark bluish ceramics according to any one of Claims 1 to 6, wherein a lightness index L* is in a range of not less than 14 nor more than 25 in the L*a*b* color space of CIE1976 of a decorative surface,
   a chromaticness index a* is in a range of not less than 0 nor more than 28 in the L*a*b* color space of CIE1976 of the decorative surface, and
   a chromaticness index b* is in a range of not less than -53 nor more than -25 in the L*a*b* color space of CIE1976 of the decorative surface.

8. A decorative component for at least one selected from the group consisting of watch, mobile terminal, fishing line guide, daily life articles, vehicle parts, sports goods, musical instrument, accessory, and architectural materials, comprising the dark bluish ceramics according to any one of Claims 1 to 7.

## EP 2 336 097 B1

**Patentansprüche**

1. Dunkelblaue Keramik, umfassend
ein Zirkoniumoxid-haltiges Stabilisierungsmittel als eine Hauptkomponente,
Aluminiumoxid,
Kobaltoxid, und
eines, ausgewählt aus der Gruppe bestehend aus Chromoxid, Nickeloxid und Eisenoxid,
worin ein Gehalt von Aluminiumoxid nicht weniger als 1 Massen-% und nicht mehr als 30 Massen-% ist,
ein Gehalt des Kobaltoxids nicht weniger als 0,5 Massen-% und nicht mehr als 5 Massen-% ist,
ein Gehalt von irgendeinem, ausgewählt aus der Gruppe bestehend aus Chromoxid, Nickeloxid und Eisenoxid,
nicht weniger als 0,1 Massen-% und nicht mehr als 1 Massen-% ist, und
das Kobaltoxid aus CoO und $Co_3O_4$ besteht.

2. Dunkelblaue Keramik nach Anspruch 1, weiterhin umfassend Hafniumoxid.

3. Dunkelblaue Keramik nach Anspruch 1 oder 2, worin ein Massenverhältnis der Masse von Kobaltoxid zu der Masse von zumindest einem, ausgewählt aus der Gruppe bestehend aus Chromoxid, Nickeloxid und Eisenoxid, nicht weniger als 2 und nicht mehr als 20 ist.

4. Dunkelblaue Keramik nach einem der Ansprüche 1 bis 3, worin das Stabilisierungsmittel eine Verbindung ist, umfassend Yttrium, oder eine Verbindung, umfassend Cer, und eine Verbindung, umfassend Dysprosium, ist.

5. Dunkelblaue Keramik nach Anspruch 4, worin das Stabilisierungsmittel eine Verbindung ist, umfassend Yttrium, und der Gehalt davon nicht weniger als 2 mol-% und nicht mehr als 4 mol-% ist.

6. Dunkelblaue Keramik nach Anspruch 4 oder 5, worin das Stabilisierungsmittel eine Verbindung ist, enthaltend Cer, und eine Verbindung, enthaltend Dysprosium, und die Gesamtmenge davon nicht weniger als 4,5 mol-% und nicht mehr als 11 mol-% ist.

7. Dunkelblaue Keramik nach einem der Ansprüche 1 bis 6, worin ein Helligkeitsindex L* in einem Bereich von nicht weniger als 14 und nicht mehr als 25 in dem L*a*b*-Farbraum von CIE1976 einer dekorativen Oberfläche ist, ein Chromatizitätsindex a* im Bereich von nicht weniger als 0 und nicht mehr als 28 im L*a*b*-Farbbereich von CIE1976 der dekorativen Oberfläche ist, und ein Chromatizitätsindex b* im Bereich von nicht weniger als -53 bis nicht mehr als -25 im L*a*b*-Farbraum von CIE1976 der dekorativen Oberfläche ist.

8. Dekorative Komponente für zumindest eines, ausgewählt aus der Gruppe bestehend aus Uhr, mobilem Terminal, Angelrute, Gegenständen für das tägliche Leben, Autoteilen, Sportwaren, Musikinstrument, Zubehörteilen und Architekturmaterialien, umfassend die dunkelblaue Keramik nach einem der Ansprüche 1 bis 7.

**Revendications**

1. Céramique bleu foncé, comprenant :

   un agent stabilisant contenant de l'oxyde de zirconium en tant que composant principal ;
   de l'oxyde d'aluminium ;
   de l'oxyde de cobalt ; et
   l'un quelconque choisi dans un groupe constitué de l'oxyde de chrome, l'oxyde de nickel et l'oxyde de fer,
   dans laquelle la teneur en oxyde d'aluminium n'est ni inférieure à 1 % en masse, ni supérieure à 30 % en masse,
   la teneur en oxyde de cobalt n'est ni inférieure à 0,5 % en masse, ni supérieure à 5 % en masse,
   la teneur en l'un quelconque choisi dans un groupe constitué de l'oxyde de chrome, l'oxyde de nickel et l'oxyde de fer n'est ni inférieure à 0,1 % en masse, ni supérieure à 1 % en masse, et
   l'oxyde de cobalt est constitué de CoO et $Co_3O_4$.

2. Céramique bleu foncé selon la revendication 1, comprenant en outre de l'oxyde d'hafnium.

3. Céramique bleu foncé selon les revendications 1 ou 2, dans laquelle le rapport en masse de la masse d'oxyde de cobalt à la masse d'au moins un choisi dans le groupe constitué de l'oxyde de chrome, l'oxyde de nickel et l'oxyde de fer n'est ni inférieur à 2, ni supérieur à 20.

4. Céramique bleu foncé selon l'une quelconque des revendications 1 à 3, dans laquelle l'agent stabilisant est un composé contenant de l'yttrium ou un composé contenant du cérium et un composé contenant du dysprosium.

5. Céramique bleu foncé selon la revendication 4, dans laquelle l'agent stabilisant est un composé contenant de l'yttrium et la teneur en celui-ci n'est ni inférieure à 2 % en moles, ni supérieure à 4 % en moles.

6. Céramique bleu foncé selon les revendications 4 ou 5, dans laquelle l'agent stabilisant est un composé contenant du cérium et un composé contenant du dysprosium et la quantité totale de ceux-ci n'est ni inférieure à 4,5 % en moles, ni supérieure à 11 % en moles.

7. Céramique bleu foncé selon l'une quelconque des revendications 1 à 6, dans laquelle l'indice de clarté L* est dans une plage de pas moins de 14 à pas plus de 25 dans l'espace de couleur L*a*b* de CIE1976 d'une surface décorative, l'indice chromatique a* est dans une plage de pas moins de zéro à pas plus de 28 dans l'espace de couleur L*a*b* de CIE1976 de la surface décorative, et
l'indice chromatique b* est dans une plage de pas moins de -53 à pas plus de -25 dans l'espace de couleur L*a*b* de CIE1976 de la surface décorative.

8. Composant décoratif pour au moins l'un choisi dans le groupe constitué d'une montre, un terminal mobile, un guide de lignes de pêche, des articles de la vie quotidienne, des pièces de véhicule, des articles de sport, un instrument de musique, un accessoire et des matériaux architecturaux, comprenant la céramique bleu foncé selon l'une quelconque des revendications 1 à 7.

*Fig. 1(a)*

*Fig. 1(b)*

Fig. 2

Fig. 3

*Fig. 4*

*Fig. 5*

Fig. 6

Fig. 7(a)

95

Fig. 7(b)

95

94

96

97

99

98

*Fig. 8*

Fig. 9

Fig. 10

EP 2 336 097 B1

*Fig. 11*

132

135

134

133

Fig. 12

*Fig. 13*

150

152

151

*Fig. 14*

160

166
163
162
161

165

164

168 170 169

167

Fig. 15

*Fig. 16*

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2038363 A

**Non-patent literature cited in the description**

- *Marubeni America Corporation Sunnyvale office homepage,* 20 February 2008, <http://www.marubeni-sunnyvale.com/high-strengthened-glass.html>